# EUROPÄISCHE PATENTSCHRIFT

(11) **EP 3 570 415 B1**
(45) Veröffentlichungstag und Bekanntmachung des Hinweises auf die Patenterteilung: **09.06.2021**
(21) Anmeldenummer: 19170580.5
(22) Anmeldetag: 23.04.2019
(51) Int. Cl.: H02K 7/09, F16C 32/04, H02K 19/06

(54) **ELEKTROMAGNETISCHER DREHANTRIEB UND ROTATIONSVORRICHTUNG**
ELECTROMAGNETIC ROTARY DRIVE AND ROTARY DEVICE
ENTRAÎNEMENT ROTATIF ÉLECTROMAGNÉTIQUE ET DISPOSITIF DE ROTATION

(30) Priorität: 18.05.2018 EP 18173277
(43) Veröffentlichungstag der Anmeldung: 20.11.2019
(73) Patentinhaber: Levitronix GmbH, 8005 Zürich (CH)
(72) Erfinder: Holenstein, Thomas, 5222 Umiken (CH)
(74) Vertreter: Intellectual Property Services GmbH

(56) Entgegenhaltungen:
- EP-A1- 2 280 471
- EP-A1- 3 232 549
- WO-A1-2012/159966
- US-A1- 2009 121 571

## Beschreibung

Die Erfindung betrifft einen elektromagnetischen Drehantrieb sowie eine Rotationsvorrichtung gemäss dem Oberbegriff des unabhängigen Patentanspruchs der jeweiligen Kategorie.

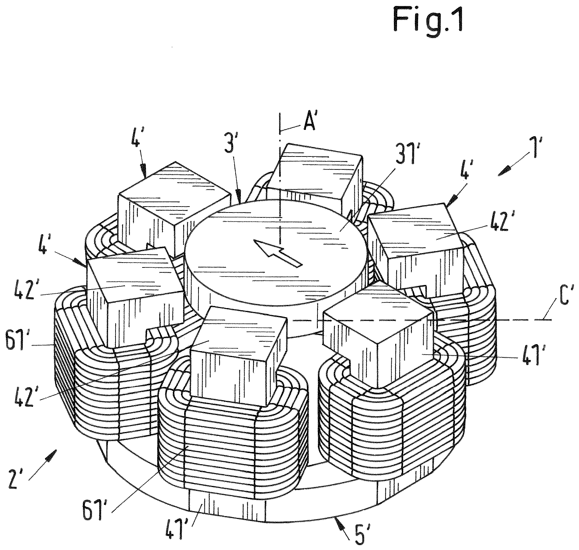

Es sind elektromagnetische Drehantriebe bekannt, die als sogenannter Tempelmotor ausgestaltet sind. Auf diese Ausgestaltung bezieht sich auch die vorliegende Erfindung. In Fig. 1 ist in einer perspektivischen Darstellung eine Ausgestaltung eines Tempelmotors zu sehen, die vom Stand der Technik bekannt ist. Um anzuzeigen, dass es sich bei der Darstellung in Fig. 1 um eine Vorrichtung aus dem Stand der Technik handelt, sind hier die Bezugszeichen jeweils mit einem Hochkomma bzw. mit einem Strich versehen. Der Tempelmotor ist gesamthaft mit dem Bezugszeichen 1' bezeichnet.

Das Charakteristische eines Tempelmotors ist es, dass der Stator 2' eine Mehrzahl von Spulenkernen 4' aufweist, von denen jeder einen stabförmigen Längsschenkel 41' umfasst, der sich parallel zur axialen Richtung A' erstreckt. Mit der axialen Richtung A' ist dabei diejenige Richtung gemeint, welche durch die Solldrehachse des Rotors 3' definiert ist, also die Drehachse, um welche der Rotor 3' im Betriebszustand rotiert, wenn er in der radialen Ebene, die senkrecht zur axialen Richtung liegt, bezüglich des Stators 2' in einer zentrierten und unverkippten Position ist. Jeder stabförmige Längsschenkel 41' erstreckt sich von einem ersten, darstellungsgemäss unteren, Ende in axialer Richtung A' bis zu einem zweiten, darstellungsgemäss oberen, Ende. Bei der Ausgestaltung gemäss Fig. 1 umfasst jeder Spulenkern 4' zusätzlich zu dem Längsschenkel 41' einen Querschenkel 42', welcher jeweils an dem zweiten Ende des Längsschenkels 41' vorgesehen ist, und welcher sich in radialer Richtung nach innen erstreckt, also im Wesentlichen rechtwinklig zum Längsschenkel 41'. Bei dieser Ausgestaltung haben die Spulenkerne 4' jeweils die Form eines L, wobei die Querschenkel 42' die kurzen Schenkel des L bilden. Der Rotor 3' ist dann zwischen den Querschenkeln 42' angeordnet. In Fig. 1 ist von dem Rotor 3' nur der magnetisch wirksame Kern 31' des Rotors 3' dargestellt, welcher als scheibenförmiger Permanentmagnet ausgestaltet ist. Die Magnetisierung des Permanentmagneten ist durch den Pfeil ohne Bezugszeichen dargestellt.

Die Mehrzahl der stabförmigen Längsschenkel 41', die sich in axialer Richtung A' erstrecken und an die Säulen eines Tempels erinnern, hat dem Tempelmotor seinen Namen gegeben.

Ferner sind elektromagnetische Drehantriebe bekannt, die nach dem Prinzip des lagerlosen Motors ausgestaltet sind und betrieben werden. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist. Das Nichtvorhandensein eines separaten magnetischen Lagers bei vollständiger magnetischer Lagerung des Rotors ist die Eigenschaft, welcher der lagerlose Motor seinen Namen verdankt.

Der lagerlose Motor ist dem Fachmann mittlerweile hinlänglich bekannt, und wird für zahlreiche verschiedene Anwendungen eingesetzt. Grundlegende Beschreibungen finden sich beispielsweise in der EP-A-0 860 046, der EP-A-0 819 330, in der EP-A-2 280 471 und in der WO 2012/159966 A1.

Aufgrund der Abwesenheit von mechanischen Lagern eignet sich der lagerlose Motor insbesondere für Pump-, Misch- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry in der Halbleiterindustrie. Auch werden lagerlose Motoren in der Halbleiterfertigung zum Tragen und Rotieren von Wafern verwendet, beispielsweise, wenn diese mit Photolack oder anderen Substanzen beschichtet bzw. behandelt werden.

Ein weiterer Vorteil des Prinzips des lagerlosen Motors bei Pump-, Rühr- oder Mischanwendungen ergibt sich bei der Ausgestaltung des Rotors als Integralrotor, der sowohl der Rotor des elektromagnetischen Antriebs ist, als auch der Rotor der Pumpe, des Rührers oder des Mischers. Neben der berührungslosen magnetischen Lagerung resultiert hier der Vorteil einer sehr kompakten und platzsparenden Ausgestaltung.

Zudem erlaubt das Prinzip des lagerlosen Motors auch Ausgestaltungen, bei denen der Rotor sehr leicht vom Stator trennbar ist. Dies ist ein sehr grosser Vorteil, weil damit beispielsweise der Rotor als Einmalteil für den Einmalgebrauch ausgestaltet werden kann. Solche Einmalanwendungen ersetzen heute häufig Prozesse, bei denen früher aufgrund der sehr hohen Reinheitsanforderungen alle diejenigen Komponenten, welche im Prozess mit den zu behandelnden Substanzen in Kontakt kommen, aufwändig gereinigt und sterilisiert werden müssen, beispielsweise mittels Dampfsterilisierung. Bei der Ausgestaltung für den Einmalgebrauch werden diejenigen Komponenten, welche mit den zu behandelnden Substanzen in Kontakt kommen, nur genau einmal verwendet und dann bei der nächsten Anwendung durch neue, das heisst ungebrauchte, Einmalteile ersetzt.

Als Beispiele seien hier die Pharmaindustrie und die biotechnologische Industrie genannt. Hier werden häufig Lösungen und Suspensionen hergestellt, die eine sorgfältige Durchmischung oder Förderung von Substanzen verlangen.

In der Pharmaindustrie müssen beispielsweise bei der Herstellung von pharmazeutisch wirksamen Substanzen höchste Ansprüche an die Reinheit gestellt werden, oft müssen die mit den Substanzen in Kontakt kommenden Komponenten sogar steril sein. Ähnliche Anforderungen ergeben sich auch in der Biotechnologie, beispielsweise bei der Herstellung, Behandlung oder Züchtung von biologischen Substanzen, Zellen oder Mikroorganismen, wo ein extrem hohes Mass an Reinheit gewährleistet sein muss, um die Brauchbarkeit des hergestellten Produkts nicht zu gefährden. Als ein weiteres Beispiel seien hier Bioreaktoren genannt, in denen beispielsweise biologische Substitute für Gewebe oder spezielle Zellen oder andere sehr empfindliche Substanzen gezüchtet werden. Auch hier benötigt man Pump-, Rühr- oder Mischvorrichtungen, um beispielsweise eine kontinuierliche Durchmischung der Nährflüssigkeit beziehungsweise deren kontinuierliche Zirkulation im Mischbehälter zu gewährleisten. Dabei muss eine sehr hohe Reinheit gewährleistet sein, um die Substanzen oder die erzeugten Produkte vor Kontaminationen zu schützen.

Bei solchen Anwendungen setzt sich dann die Pump-, Rühr- oder Mischvorrichtung aus einer Einmalvorrichtung und einer wiederverwendbaren Vorrichtung zusammen. Dabei umfasst die Einmalvorrichtung diejenigen Komponenten, die mit den Substanzen in Kontakt kommen und die als Einmal (single-use) -teile für den Einmalgebrauch ausgestaltet sind. Dies ist beispielsweise der Pump- oder Mischbehälter mit dem darin vorgesehenen Rotor, der dann beispielsweise ein Flügelrad zum Fördern der Substanzen umfasst. Die wiederverwendbare Vorrichtung umfasst diejenigen Komponenten, die dauerhaft also mehrfach verwendet werden, beispielsweise den Stator. Eine solche Vorrichtung ist zum Beispiel in der EP-B-2 065 085 offenbart.

Bei der Herstellung bzw. der Konzipierung von Einmalteilen für den Einmalgebrauch ist es ein wichtiges Kriterium, dass sie in möglichst einfacher Weise mit der wiederverwendbaren Vorrichtung bzw. deren Komponenten zusammengesetzt werden können. Es ist wünschenswert, dass dieses Zusammensetzen mit möglichst geringem Aufwand, mit wenigen Handgriffen, rasch und vorzugsweise ohne Werkzeug erfolgen kann.

Eine besonders vorteilhafte und an sich bekannte Ausgestaltung eines elektromagnetischen Drehantriebs ist es, den eingangs beschriebenen Tempelmotor als lagerlosen Motor auszubilden - egal ob er Komponenten für den Einmalgebrauch umfasst oder nicht. Eine derartige Ausgestaltung ist beispielsweise auch in der EP-A-3 232 549 offenbart.

Bei der in Fig. 1 dargestellten Ausgestaltung des Tempelmotors 1' als lagerloser Motor sind die Spulenkerne 4' - hier beispielsweise sechs Spulenkerne 4' - mit den stabförmigen Längsschenkeln 41' und den Querschenkeln 42' kreisförmig und äquidistant um den Rotor 3' herum angeordnet (Innenläufer). Die ersten Enden der Längsschenkel 41' sind in radialer Richtung durch einen Rückschluss 5' verbunden, welcher mehrere Segmente umfasst, die jeweils zwischen zwei benachbarten Spulenkernen 4' angeordnet sind. Der permanentmagnetische, scheibenförmige Rotor 3' ist zwischen den radial innenliegenden Enden der Querschenkel 42' angeordnet und rotiert im Betriebszustand um die axiale Richtung A', wobei der Rotor 3' berührungslos magnetisch angetrieben und berührungslos magnetisch bezüglich des Stators 2' gelagert ist, und wobei die radiale Position des Rotors 3' so geregelt wird, dass er sich in einer zentrierten Position zwischen den Querschenkeln 42' befindet.

Um die für den magnetischen Antrieb und die magnetische Lagerung des Rotors 3' notwendigen elektromagnetischen Drehfelder zu erzeugen, tragen die Längsschenkel 41' Wicklungen. Bei der in Fig. 1 gezeigten Ausführungsform sind die Wicklungen beispielsweise so ausgestaltet, dass um jeden Längsschenkel 41' herum eine diskrete Spule 61' gewickelt ist, das heisst, die Spulenachse jeder Spule 61' erstreckt sich jeweils in axialer Richtung A'. Dabei ist es typisch für den Tempelmotor, dass die Spulenachsen der Spulen 61' parallel zur Solldrehachse verlaufen und, dass die Spulen 61' bzw. die Wicklungen nicht in der magnetischen Rotorebene C' angeordnet sind. Die magnetische Rotorebene C' ist die magnetische Mittelebene des magnetisch wirksamen Kerns 31' des Rotors 3'. Dies ist diejenige Ebene senkrecht zur axialen Richtung A', in welcher der Rotor 3' bzw. der magnetisch wirksame Kern 31' des Rotors 3' im Betriebszustand gelagert wird. In der Regel und insbesondere bei der in Fig. 1 dargestellten Ausgestaltung des magnetisch wirksamen Kerns 31' des Rotors 3' als Scheibe ist die magnetische Rotorebene C' die geometrische Mittelebene des magnetisch wirksamen Kerns 31' des Rotors 3', die senkrecht zur axialen Richtung A' liegt. Wie dies Fig. 1 zeigt, sind die Spulen 61' unterhalb der magnetischen Rotorebene C' angeordnet und vorzugsweise unterhalb des magnetisch wirksamen Kerns 31' des Rotors 3'.

Einer der Vorteile der Ausgestaltung als Tempelmotor ist es, dass in der magnetischen Rotorebene C' keine Wicklungen oder Wickelköpfe des Stators vorhanden sind. Dies ermöglicht es beispielsweise bei einer Anwendung des Tempelmotors in einer Zentrifugalpumpe, dass der Auslass der Zentrifugalpumpe in der Ebene vorgesehen werden kann, in welcher das Flügelrad des Pumpenrotors rotiert, der Auslass also auf gleicher Höhe bezüglich der axialen Richtung A' liegt wie die Flügel des Pumpenrotors, ohne dass dabei die Wicklungen des Stators stören. Diese zentrale, d.h. mittige Anordnung des Pumpenauslasses ist unter hydrodynamischen Aspekten und im Hinblick speziell auf die passive Lagerung und Stabilisierung des Rotors gegen Verkippungen besonders günstig.

Ein anderer Aspekt bei der Konzeption von elektromagnetischen Drehantrieben mit magnetisch angetriebenem und magnetisch gelagertem Rotor - nicht nur aber auch im Zusammenhang mit Komponenten für den Einmalgebrauch - ist eine möglichst wirtschaftliche und kostengünstige Fertigung. Hierbei wird insbesondere auch Wert auf preisgünstige, einfache Ausgangsmaterialien, wie beispielsweise handelsübliche Kunststoffe, gelegt. Auch ein umweltbewusster Umgang sowie eine verantwortungsvolle Nutzung der zur Verfügung stehenden Ressourcen sind wesentliche Aspekte.

Es ist gemäss dem heutigen Stand der Technik üblich, für Permanentmagnete, die im Stator und/oder im Rotor angeordnet sind, insbesondere Metalle der Seltenen Erden bzw. Verbindungen oder Legierungen dieser Metalle zu verwenden, weil sich mit diesen aufgrund ihrer magnetischen Eigenschaften sehr starke permanentmagnetische Felder erzeugen lassen. Bekannte und häufig verwendete Beispiele dieser Seltenen Erden sind Neodym und Samarium. Solche Metalle stellen jedoch aufgrund ihres vergleichsweise geringen Vorkommens sowie ihrer aufwendigen Gewinnung und Verarbeitung einen erheblichen Kostenfaktor dar. Zudem ist die Entsorgung solcher Permanentmagnete, beispielsweise nach dem Einmalgebrauch, auch unter umwelttechnischen Aspekten häufig mit Problemen oder hohem Aufwand verbunden, wodurch zusätzliche Kosten entstehen. Es ist daher unter wirtschaftlichen, Kosten- und Umweltaspekten häufig wünschenswert, die Verwendung von permanentmagnetischen Materialien sowohl im Stator als auch im Rotor möglichst gering zu halten. Dies ist insbesondere auch bei Einmalanwendungen wünschenswert.

Ausgehend von diesem Stand der Technik ist es eine Aufgabe der Erfindung, einen anderen elektromagnetischen Drehantrieb mit magnetisch gelagertem Rotor bereitzustellen, der als Tempelmotor ausgestaltet ist, und der sich für eine Vielzahl von Anwendungen einsetzen lässt. Der Drehantrieb soll möglichst wirtschaftlich und kostengünstig in der Herstellung sein. Ferner soll der Drehantrieb auch für Anwendungen mit Komponenten für den Einmalgebrauch geeignet sein. Zudem ist es eine Aufgabe der Erfindung, eine Rotationsvorrichtung zum Fördern, Pumpen, Mischen oder Rühren von Fluiden vorzuschlagen, die einen solchen Drehantrieb umfasst.

Die diese Aufgabe lösenden Gegenstände der Erfindung sind durch die Merkmale des unabhängigen Patentanspruchs 1 gekennzeichnet.

Erfindungsgemäss wird also ein elektromagnetischer Drehantrieb vorgeschlagen, der als Tempelmotor ausgestaltet ist, mit einem Rotor, welcher berührungslos magnetisch antreibbar ist, welcher spulenfrei und frei von Permanentmagneten ausgestaltet ist, und welcher einen scheibenförmigen magnetisch wirksamen Kern umfasst, sowie mit einem Stator, welcher als Lager- und Antriebsstator ausgestaltet ist, mit welchem der Rotor im Betriebszustand berührungslos magnetisch um eine Solldrehachse antreibbar ist, und mit welchem der Rotor berührungslos magnetisch bezüglich des Stators lagerbar ist, wobei der Stator eine Mehrzahl von Spulenkernen aufweist, von denen jeder einen stabförmigen Längsschenkel umfasst, welcher sich von einem ersten Ende in einer Richtung parallel zur Solldrehachse bis zu einem zweiten Ende erstreckt, sowie einen Querschenkel, welcher an dem zweiten Ende des Längsschenkels angeordnet ist, und welcher sich in einer radialen Richtung erstreckt, die senkrecht zu einer durch die Solldrehachse definierten axialen Richtung ist, wobei eine Mehrzahl von Wicklungen zur Erzeugung eines elektromagnetischen Drehfelds vorgesehen ist, von denen jede einen der Längsschenkel umgibt, wobei der Stator frei von Permanentmagneten ausgestaltet ist, wobei der Rotor als ferromagnetischer oder ferrimagnetischer Rotor ausgestaltet ist, welcher genau eine magnetische Vorzugsrichtung aufweist, die sich in radialer Richtung erstreckt, und wobei der magnetisch wirksame Kern des Rotor in der magnetischen Vorzugsrichtung einen magnetischen Widerstand aufweist, der höchsten halb so gross ist wie der magnetische Widerstand in einer Richtung, welche senkrecht auf der magnetischen Vorzugsrichtung und senkrecht auf der axialen Richtung steht.

Durch die Erfindung wird somit ein elektromagnetischer Drehantrieb vorgeschlagen, der nach dem Prinzip des lagerlosen Motors und als Tempelmotor ausgestaltet ist, wobei sowohl der Stator als auch der Rotor des Drehantriebs frei von Permanentmagneten sind. Das heisst, weder der Stator noch der Rotor weisen Permanentmagnete auf, welche zur Erzeugung des Antriebsdrehmoments oder zur Krafterzeugung für die magnetische Lagerung des Rotors beitragen. Ein wesentlicher Aspekt ist dabei, dass der permanentmagnetfreie und scheibenförmig ausgestaltete magnetisch wirksame Kern des Rotors eine starke Anisotropie in seinem magnetischen Widerstand aufweist. Dadurch, dass der magnetisch wirksame Kerne genau eine magnetische Vorzugsrichtung aufweist, in welcher sein magnetischer Widerstand deutlich kleiner ist als in der dazu senkrechten Richtung, verhält sich der Rotor im Betriebszustand ähnlich wie ein permanentmagnetische Rotor, der zwei magnetische Pole hat, also die Polpaarzahl eins aufweist. Diese Kombination der scheibenförmigen Ausgestaltung mit der starken magnetischen Anisotropie, welche der eines zweipoligen Rotors vergleichbar ist, ermöglicht einen zuverlässigen magnetischen Antrieb des Rotors bei einer gleichzeitig berührungslos magnetischen Lagerung des Rotors bezüglich des Stators, obwohl keine permanentmagnetische Vormagnetisierung vorgesehen ist. Überraschend ist dabei, dass trotz des Verzichts auf eine permanentmagnetische Vormagnetisierung eine ausreichend grosse magnetische Durchflutung generiert werden kann, um den Rotor zuverlässig magnetisch lagern und antreiben zu können. Dies ist auch insofern überraschend, weil der Abstand in radialer Richtung zwischen dem Stator und dem magnetisch wirksamen Kern des Rotors nicht beliebig klein gemacht werden kann, denn im Bereich zwischen dem Stator und dem magnetisch wirksamen Kern des Rotors werden je nach Ausgestaltung häufig verschiedene Ummantelungen, Spalte und Wandungen untergebracht, insbesondere eine Ummantelung des magnetisch wirksamen Kerns des Rotors, der Fluidspalt, oder ein Spalttopf, welcher den Stator umgibt. Daher ist in der Praxis häufig ein Abstand von mindestens einem Millimeter, besser von 4-6 Millimetern zwischen dem Stator und dem magnetisch wirksamen Kern des Rotors erwünscht.

Die durch die magnetische Anisotropie bewirkte zweipolige Ausgestaltung des Rotors im Betriebszustand stellt die minimal mögliche Polpaarzahl des Rotors dar. Die niedrige Polpaarzahl des Rotors von eins ist sowohl im Hinblick auf den Antrieb des Rotors als auch im Hinblick auf seine magnetische Lagerung vorteilhaft, weil insbesondere bei höheren Drehfrequenzen des Rotors die Verlustleistungen, welche durch die Regelung des Antriebs und der Lagerung des Rotors auftreten, erheblich geringer sind als bei Rotoren, die eine höhere magnetische Polpaarzahl aufweisen. Zudem ermöglicht diese geringe Polpaarzahl des Rotors eine besonders einfache Regelung insbesondere der Rotorposition in radialer Richtung.

Ferner ist diese Ausgestaltung des Rotors bzw. seines scheibenförmigen magnetisch wirksamen Kerns, welche vergleichbar ist mit einem Reluktanzläufer der Polpaarzahl 1, auch im Hinblick auf die Minimierung der Rastmomente oder des Nutrastens sehr vorteilhaft.

Zudem ist der Rotor normalerweise käfigfrei ausgestaltet. Das heisst, der Rotor weist auch keinen Käfig auf, wie er typischerweise bei Käfigläufern oder Kurzschlussläufern vorgesehen ist. Bei einem Induktionsmotor wird beispielsweise der Rotor mit einem solchen Käfig ausgestaltet, der üblicherweise aus Leiterstäben besteht, welche an den Enden miteinander verbunden sind. Bei dem erfindungsgemässen Drehantrieb weist der Rotor üblicherweise keinen solchen Käfig auf, ist also frei von Käfigen.

Durch den vollständigen Verzicht auf Permanentmagnete, die zur Generierung des Antriebs- oder Steuerflusses bzw. des Antriebsdrehmoments und der magnetischen Lagerkräfte beitragen, und zwar im Stator als auch im Rotor, lässt sich der erfindungsgemässe Drehantrieb besonders einfach, wirtschaftlich und kostengünstig produzieren. Dies ist nicht nur, aber auch für Anwendungen mit Komponenten für den Einmalgebrauch ein grosser Vorteil.

Der Verzicht auf Permanentmagnete ist auch deshalb unter wirtschaftlichen, Kosten- und Umweltaspekten vorteilhaft, weil die üblicherweise zur Herstellung von Permanentmagneten verwendeten Metalle der Seltenen Erden, beispielsweise Neodym und Samarium, bzw. Verbindungen oder Legierungen dieser Metalle für den erfindungsgemässen Drehantrieb nicht benötigt werden.

Vorzugsweise umfasst der magnetisch wirksame Kern des Rotors ein ferromagnetisches Material, wobei das ferromagnetische Material einen Volumenanteil von 30% bis 80%, vorzugsweise von 40% bis 75%, und besonders bevorzugt von 50% bis 70% des magnetisch wirksamen Kerns hat. Besonders bevorzugt ist das ferromagnetische Material ein weichmagnetisches Material, insbesondere Eisen oder Silizium-Eisen. Der Volumenanteil des ferromagnetischen Materials, der im Folgenden auch als Füllgrad bezeichnet wird, gibt den prozentualen Anteil an, welchen das ferromagnetische Material vom magnetisch wirksamen Kern des Rotors einnimmt, oder anders ausgedrückt, wieviel Prozent des Volumens des magnetisch wirksamen Kerns aus dem ferromagnetischen Material bestehen. In der Praxis hat sich je nach Anwendung ein Volumenanteil von 30-80% des ferromagnetischen Materials bewährt, wobei die höheren Werte vorteilhaft sind, wenn eine hohe passive Steifigkeit der magnetischen Lagerung erwünscht ist. Ein bevorzugter Bereich für den Volumenanteil des ferromagnetischen Materials ist der Bereich von 40% bis 75%, wobei der Bereich von 50%-70% für viele Anwendungen besonders bevorzugt ist.

Im Hinblick auf die magnetische Lagerung des Rotors und speziell im Hinblick auf eine passive magnetische Stabilisierung des Rotors gegen Verkippungen ist es bevorzugt, dass der scheibenförmige magnetisch wirksame Kern des Rotors einen Durchmesser aufweist, welcher grösser ist als das Zweifache, vorzugsweise grösser als das 2,4-fache, der axialen Höhe des magnetisch wirksamen Kerns.

Gemäss einer besonders bevorzugten Ausgestaltung umfasst der magnetisch wirksame Kern des Rotors eine Mehrzahl von stabförmigen ferromagnetischen Elementen, die sich jeweils senkrecht zur axialen Richtung erstrecken, und welche parallel und beabstandet zueinander angeordnet sind. Durch diese Anordnung lässt sich in besonders einfacher Weise die gewünschte magnetische Anisotropie des magnetischen Widerstands des magnetisch wirksamen Kerns des Rotors realisieren. Durch die zueinander parallelen stabförmigen ferromagnetischen Elemente hat der Rotor genau eine magnetische Vorzugsrichtung, nämlich diejenige Richtung, welche durch die Längserstreckung der stabförmigen ferromagnetischen Elemente festgelegt ist. Da die stabförmigen ferromagnetischen Elemente beabstandet voneinander angeordnet sind, ist der magnetische Widerstand in der Richtung, welche senkrecht auf der magnetischen Vorzugsrichtung und senkrecht auf der axialen Richtung steht, deutlich grösser als in der magnetischen Vorzugsrichtung. Somit wird der magnetische Fluss im magnetisch wirksamen Kern zumindest hauptsächlich nur in der magnetischen Vorzugsrichtung geführt, nämlich in Richtung der Längserstreckung der stabförmigen ferromagnetischen Elemente. In der Querrichtung, also in Richtung zwischen zwei benachbarten stabförmigen ferromagnetischen Elementen, ist der magnetische Fluss zumindest vernachlässigbar klein.

Der Raum zwischen zwei jeweils benachbarten stabförmigen ferromagnetischen Elementen ist vorzugsweise mit einem niederpermeablen Material gefüllt, also mit einem Material, das nur eine geringe magnetische Permeabilität (magnetische Leitfähigkeit) aufweist. Dieses niederpermeable Material kann beispielsweise Luft sein, oder ein Kunststoff, oder ein paramagnetisches Metall oder ein diamagnetisches Metall, oder auch Kombinationen dieser Materialien. Als niederpermeabel werden im Rahmen dieser Anmeldung -wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl die kleiner als 1.1 ist. Das niederpermeable Material stellt somit Flussbarrieren dar, welche zumindest weitestgehend verhindern, dass der magnetische Fluss senkrecht zur magnetischen Vorzugsrichtung von einem ferromagnetischen Element zu einem benachbarten ferromagnetischen Element strömt.

Um die mechanische Stabilität des magnetisch wirksamen Kerns des Rotors zu erhöhen, ist es eine bevorzugte Massnahme, wenn der magnetisch wirksame Kern des Rotors eine Mehrzahl von Querstegen aufweist, von denen jeder zwei benachbarte ferromagnetische Elemente miteinander verbindet. Diese Querstege können, müssen aber nicht aus dem gleichen ferromagnetischen Material bestehen wie die stabförmigen ferromagnetischen Elemente, haben aber nur eine mechanische Funktion. Insbesondere, wenn die Querstege aus einem ferromagnetischen Material bestehen, sind sie geometrisch so bemessen, dass sie die gewünschte magnetische Anisotropie des magnetisch wirksamen Kerns nicht oder nur unwesentlich beeinflussen. Dies kann beispielsweise dadurch erreicht werden, dass die Querstege jeweils deutlich dünner ausgestaltet sind als die stabförmigen ferromagnetischen Elemente. Bevorzugt ist die Querschnittsfläche senkrecht zur Längserstreckung jedes Querstegs mindestens um einen Faktor 4, vorzugsweise mindestens um einen Faktor 9 kleiner als die entsprechende Querschnittsfläche der stabförmigen ferromagnetischen Elemente. Hierdurch wird bewirkt, dass im Betriebszustand die Querstege praktisch sofort magnetisch sättigen, also in den Bereich der Sättigungsmagnetisierung gelangen, sodass sie keinen wesentlichen Beitrag mehr zur magnetischen Flussführung leisten und somit die magnetische Anisotropie des Rotors höchstens unwesentlich verändern.

Zur Reduzierung von Wirbelstromverlusten ist vorzugsweise der magnetisch wirksame Teil des Rotors geblecht aus einer Mehrzahl von Rotorelementen hergestellt, wobei die Rotorelemente vorzugsweise in axialer Richtung gestapelt sind. Natürlich ist es auch möglich, die einzelnen Rotorelemente in radialer Richtung zu stapeln. Es versteht sich von selbst, dass sich die geblechte Ausgestaltung auf die ferromagnetischen oder metallischen Komponenten des magnetisch wirksamen Kerns bezieht.

Eine weitere bevorzugte Massnahme ist es, dass der magnetisch wirksame Kern des Rotors einen radial aussen angeordneten Ring umfasst, welcher alle stabförmigen ferromagnetischen Elemente umschliesst. Dieser Ring kann integral mit den stabförmigen ferromagnetischen Elementen gefertigt werden, sodass der Ring die einzelnen ferromagnetischen Elemente miteinander verbindet. Der Ring ist dann vorzugsweise aus dem gleichen Material hergestellt wie die ferromagnetischen Elemente. In diesem Fall verbessert der Ring die Konstanz des Drehmoments über die Rotation des Rotors gesehen. Zudem kann der Ring als Messfläche für Sensoren dienen, beispielsweise für Positionssensoren, mit denen die Lage des Rotors in der radialen Ebene bzw. in radialer Richtung ermittelt wird.

Es ist aber auch möglich, den Ring als ein separates Bauteil auszuführen, welches dann um die stabförmigen ferromagnetischen Elemente herum angeordnet wird, sodass diese von dem Ring umschlossen sind. Ferner ist es möglich, dass der Ring aus einem elektrisch leitenden Material gefertigt ist, welches verschieden von dem ferromagnetischen Material des magnetisch wirksamen Kerns des Rotors ist. In diesem Fall dient der Ring hauptsächlich zur mechanischen Stabilisierung des magnetisch wirksamen Kerns des Rotors und als Messfläche für Sensoren.

Durch den radial aussen angeordnete Ring, egal ob er aus dem ferromagnetischen Material oder aus einem elektrisch leitenden Material gefertigt ist, lässt sich die für die Steuerung und Regelung der Rotorposition benötigte Sensorik vereinfachen, weil der Sollabstand des Rotors von den Spulenkernen über den Umfang des Rotors gesehen eine konstante Grösse ist.

Um insbesondere Wirbelstromverluste im Stator zu minimieren, ist es vorteilhaft, wenn jeder der Spulenkerne jeweils geblecht aus Elementen hergestellt ist, wobei die Elemente in Umfangsrichtung des Rotors gestapelt sind.

Eine weitere vorteilhafte Massnahme besteht darin, dass die dem Rotor zugewandten Stirnflächen der Querschenkel der Spulenkerne in axialer Richtung eine Höhe aufweisen, die jeweils grösser ist als die axiale Höhe des magnetisch wirksamen Kerns des Rotors. Hieraus resultiert insbesondere eine stärkere bzw. bessere passiv magnetische Stabilisierung des Rotors gegen Verkippungen gegenüber der Solldrehachse. Zudem resultiert durch die höheren Stirnflächen der Querschenkel eine Konzentration des magnetischen Flusses.

Vorzugsweise sind die dem Rotor zugewandten Stirnflächen der Querschenkel der Spulenkerne jeweils gekrümmt als Segmente eines Kreiszylinders ausgestaltet, welcher koaxial mit dem Rotor ist, sodass der Rotor in einem zentrierten Zustand über die jeweilige Stirnfläche gesehen einen konstanten Abstand in radialer Richtung von der Stirnfläche hat. Durch diese gekrümmte Ausgestaltung der Stirnflächen, welche der Krümmung des Rotors folgt, wird zum einen der effektive magnetische Luftspalt zwischen dem Stator und dem Rotor möglichst klein ausgestaltet. Zum anderen wird durch den über den Umfang des Rotors gesehen konstante Abstand zwischen dem Rotor und den Stirnflächen der Querschenkel das auf den Rotor ausgeübte Drehmoment über die Umdrehung des Rotors gesehen besonders konstant, das heisst Fluktuationen des Drehmoments werden zumindest deutlich reduziert. Hierdurch werden auch Drehmomentrippel und Rastmomente deutlich reduziert.

Zur Bestimmung der Position des Rotors in der radialen Ebene (magnetische Rotorebene) ist vorzugsweise eine Mehrzahl von Positionssensoren zur Bestimmung der Position des Rotors vorgesehen, wobei jeder Positionssensor zwischen zwei benachbarten Spulenkernen angeordnet ist.

Ferner ist es vorteilhaft, wenn eine Mehrzahl von Winkelsensoren zur Bestimmung der Winkelposition des Rotors vorgesehen ist. Mit der Winkelposition des Rotors ist dabei der Rotorwinkel gemeint, welcher die momentane Drehstellung des Rotors in der radialen Ebene bezüglich einer frei festlegbaren Nulllage beschreibt. Vorzugsweise sind die Winkelsensoren als Hallsensoren ausgestaltet.

Durch die Erfindung wird ferner eine Rotationsvorrichtung zum Fördern, Pumpen, Mischen oder Rühren von Fluiden vorgeschlagen, welche einen elektromagnetischen Drehantrieb umfasst, der erfindungsgemäss ausgestaltet ist, wobei der Rotor des Drehantriebs als Rotor der Rotationsvorrichtung ausgestaltet ist. Diese auch als Integralrotor bezeichnete Ausführungsform ermöglicht eine besonders kompakte Ausgestaltung der Rotationsmaschine, weil der Rotor des elektromagnetischen Drehantriebs gleichzeitig auch der Rotor der Rotationsmaschine ist, mit welchem eine Kraft auf das zu fördernde bzw. zu mischende bzw. zu rührende Fluid ausgeübt wird.

Gemäss einer Ausführungsform ist der Rotor als Pumpenrotor ausgestaltet, und weist eine Mehrzahl von Flügeln zum Fördern eines Fluids auf. Insbesondere kann die Rotationsmaschine dann als Zentrifugalpumpe ausgestaltet sein, bei welcher der Rotor das Laufrad bzw. das Flügelrad der Pumpe bildet, mit welchem das Fluid von einem Eingang eines Pumpengehäuses zu einem Ausgang eines Pumpengehäuses gefördert wird.

Wenn der Rotor als Pumpenrotor ausgestaltet ist, weist der Rotor bevorzugt eine Mehrzahl von Entlastungskanälen auf, welche sich jeweils in axialer Richtung durch den magnetisch wirksamen Kern des Rotors hindurch erstrecken, wobei jeder Entlastungskanal derart angeordnet ist, dass das ferromagnetische Material des magnetisch wirksamen Kerns des Rotors vollständig frei von Entlastungskanälen ist. Die Entlastungsbohrungen dienen dazu, den Axialschub auf den Rotor zumindest teilweise auszugleichen, wodurch die magnetische Axiallagerung entlastet wird. Die Entlastungskanäle verlaufen im magnetisch wirksamen Kern des Rotors vorzugsweise nur durch das niederpermeable Material, also die Flussbarrieren, sodass das ferromagnetische Material, also beispielsweise die stabförmigen ferromagnetischen Elemente, von diesen Entlastungskanälen weder durchdrungen noch tangiert werden.

Die erfindungsgemässe Rotationsvorrichtung kann insbesondere auch so ausgestaltet sein, dass sie Komponenten für den Einmalgebrauch umfasst. In dieser Ausgestaltung hat die Rotationsvorrichtung vorzugsweise eine Einmalvorrichtung, die für den Einmalgebrauch ausgestaltet ist, sowie eine wiederverwendbaren Vorrichtung, die für den Mehrfachgebrauch ausgestaltet ist, wobei die Einmalvorrichtung zumindest den Rotor umfasst, welcher eine Mehrzahl von Flügeln zum Fördern, Pumpen, Mischen oder Rühren des Fluides oder der Fluide aufweist, und wobei die wiederverwendbare Vorrichtung zumindest den Stator umfasst, mit welchem der Rotor im Betriebszustand berührungslos magnetisch antreibbar und lagerbar ist. Falls die Rotationsvorrichtung als Pumpe ausgestaltet ist, so umfassen die Komponenten für den Einmalgebrauch vorzugsweise auch das Pumpengehäuse, in welchem der Rotor angeordnet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der teilweise schematischen Zeichnung zeigen (teilweise im Schnitt):
- Fig. 1:: eine perspektivische Darstellung eines Tempelmotors gemäss dem Stand der Technik,
- Fig. 2:: eine perspektivische Darstellung eines ersten Ausführungsbeispiels eines erfindungsgemässen elektromagnetischen Drehantriebs,
- Fig. 3:: eine perspektivische Darstellung eines zweiten Ausführungsbeispiels eines erfindungsgemässen elektromagnetischen Drehantriebs,
- Fig. 4:: einen schematischen Schnitt in axialer Richtung durch das zweite Ausführungsbeispiel aus Fig. 3,
- Fig. 5:: eine Aufsicht auf das zweite Ausführungsbeispiel aus Fig. 3,
- Fig. 6-8:: verschiedene Varianten für die Ausgestaltung der Spulenkerne, jeweils in einer perspektivischen Darstellung,
- Fig. 9-21:: verschiedene Varianten für die Ausgestaltung des Rotors, jeweils in einer schematischen Aufsicht,
- Fig. 22-23:: verschiedene Ausführungsformen des Rotors, bei welchen der magnetisch wirksame Kern geblecht ausgestaltet ist, jeweils in einer perspektivischen Darstellung,
- Fig. 24-27:: verschiedene Varianten für die Anordnung von Sensoren, jeweils in einer perspektivischen Darstellung,
- Fig. 28:: eine perspektivische Darstellung eines Ausführungsbeispiels einer erfindungsgemässen Rotationsvorrichtung, das als Pumpvorrichtung ausgestaltet ist,
- Fig. 29:: einen schematischen Schnitt in axialer Richtung durch das Ausführungsbeispiel aus Fig. 28,
- Fig. 30:: eine perspektivische Darstellung des Rotors des Ausführungsbeispiels aus Fig. 28,
- Fig. 31:: eine Aufsicht auf den Rotor aus Fig. 30,
- Fig. 32: einen schematischen Schnitt in axialer Richtung durch den Rotor aus Fig. 30 entlang der Schnittlinie S1-S1 in Fig. 30, und
- Fig. 33:: einen schematischen Schnitt in axialer Richtung durch den Rotor aus Fig. 30 entlang der Schnittlinie S2-S2 in Fig. 30.

Wie bereits erwähnt und erläutert, ist in Fig. 1 ein als Tempelmotor ausgestalteter elektromagnetischer Drehantrieb dargestellt, der aus dem Stand der Technik bekannt sind.

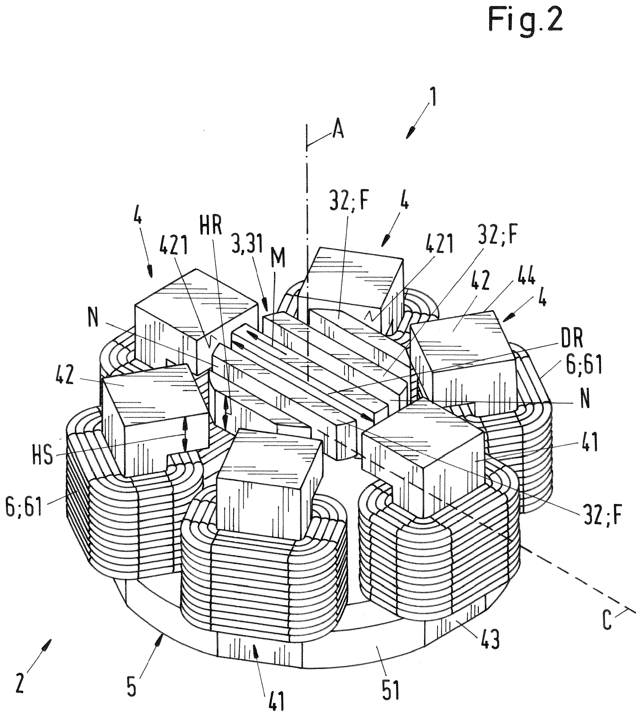

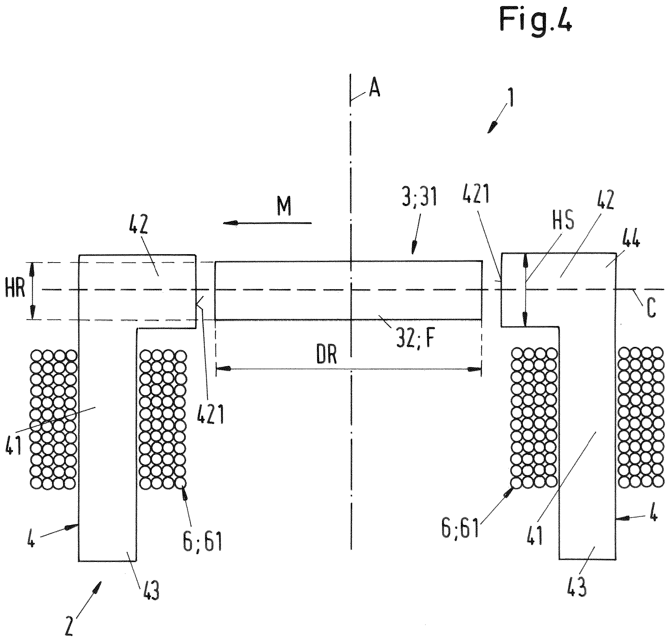

Fig. 2 zeigt eine perspektivische Darstellung eines ersten Ausführungsbeispiels eines erfindungsgemässen elektromagnetischen Drehantriebs, der gesamthaft mit dem Bezugszeichen 1 bezeichnet ist. Der Drehantrieb 1 ist als Tempelmotor ausgestaltet und umfasst einen Stator 2 sowie einen in dem Stator 2 berührungslos magnetisch gelagerten Rotor 3, welcher spulenfrei, käfigfrei und frei von Permanentmagneten ausgestaltet ist. Auch der Stator 2 ist frei von Permanentmagneten ausgestaltet. Der Rotor 3 umfasst einen magnetisch wirksamen Kern 31, welcher in Form einer Kreisscheibe, beziehungsweise eines Kreiszylinders der Höhe HR (siehe auch Fig. 4) und mit dem Durchmesser DR ausgestaltet ist. Mit dem "magnetisch wirksamen Kern 31" ist derjenige Bereich des Rotors 3 gemeint, welcher für die Drehmomentbildung sowie für die Erzeugung der magnetischen Lagerkräfte mit dem Stator 2 zusammenwirkt. Im Betriebszustand ist der Rotor 3 mittels des Stators 2 berührungslos magnetisch um eine Solldrehachse antreibbar. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet. Diese Solldrehachse definiert eine axiale Richtung A. Üblicherweise stimmt die die axiale Richtung A festlegende Solldrehachse mit der Mittelachse des Stators 2 überein.

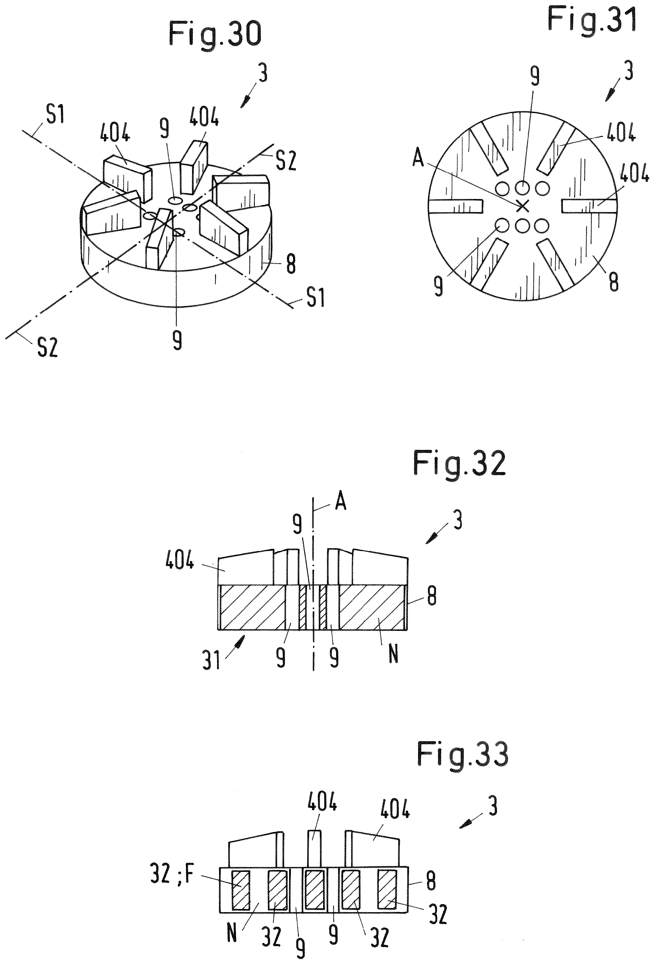

Da es für das Verständnis der Erfindung ausreichend ist, ist bei den im Folgenden beschriebenen Ausführungsbeispielen und Varianten des elektromagnetischen Drehantriebs 1 jeweils nur der magnetisch wirksame Kern 31 des Rotors 3 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder Flügel zum Mischen, Rühren oder Pumpen eines Fluides oder sonstige Komponenten (siehe z. B. Fig. 30).

Im Folgenden wird mit einer radialen Richtung eine Richtung bezeichnet, welche senkrecht auf der axialen Richtung A steht. Ferner wird mit der magnetischen Rotorebene C die magnetische Mittelebene des magnetisch wirksamen Kerns 31 des Rotors 3 bezeichnet. Dies ist diejenige Ebene senkrecht zur axialen Richtung A, in welcher der Rotor 3 bzw. der magnetisch wirksame Kern 31 des Rotors 3 im Betriebszustand gelagert wird, wenn der Rotor 3 nicht verkippt ist. In der Regel ist bei einem scheibenförmigen magnetisch wirksamen Kern 31 die magnetische Rotorebene C die geometrische Mittelebene des magnetisch wirksamen Kerns 31 des Rotors 3, die senkrecht zur axialen Richtung A liegt. Diejenige Ebene, in welcher der Rotor 3 im Betriebszustand gelagert wird, wird auch als radiale Ebene bezeichnet. Die radiale Ebene definiert die x-y-Ebene eines kartesischen Koordinatensystems, dessen z-Achse in axialer Richtung A verläuft. Ist der Rotor 3 nicht verkippt, so stimmt die radiale Ebene mit der magnetischen Rotorebene C überein.

Das Charakteristische einer Ausgestaltung als Tempelmotor ist es, dass der Stator 2 eine Mehrzahl von separaten Spulenkernen 4 - hier sechs Spulenkerne 4 - umfasst, von denen jeder einen stabförmigen Längsschenkel 41 umfasst, welcher sich von einem ersten Ende 43 in axialer Richtung A bis zu einem zweiten Ende 44 erstreckt, wobei alle ersten Enden 43 - gemäss der Darstellung in Fig. 2 sind dies die unteren Enden - durch einen Rückschluss 5 miteinander verbunden sind. Dabei umfasst der Rückschluss 5 mehrere Segmente 51, von denen jedes jeweils das erste Ende 43 eines Spulenkerns 4 mit dem ersten Ende 43 eines benachbarten Spulenkerns 4 verbindet. Die Längsschenkel 41 weisen senkrecht zur axialen Richtung A einen rechteckigen Querschnitt auf.

Ferner umfasst jeder Spulenkern 4 einen Querschenkel 42, welcher an dem zweiten Ende 44 des jeweiligen Längsschenkels 41 angeordnet ist, und welcher sich in radialer Richtung, also senkrecht zur axialen Richtung A und damit senkrecht zu dem jeweiligen Längsschenkel 41 erstreckt. Jeder Querschenkel 42 erstreckt sich in radialer Richtung nach innen, also auf den Rotor 3 zu. Jeder Spulenkern 4 hat somit eine L-förmige Ausgestaltung, wobei die Längsschenkel 41 jeweils den sich in axialer Richtung A erstreckenden langen Schenkel des L bilden, und die sich senkrecht zu den Längsschenkeln 41 in radialer Richtung auf den Rotor 3 hin gerichtet erstreckenden Querschenkel 42 jeweils den kurzen Schenkel des L bilden.

Jeder Querschenkel 42 hat eine radial innenliegende Stirnfläche 421, welche dem Rotor 3 zugewandt ist. Dabei ist die Stirnfläche 421 so angeordnet, dass ihre Mittellinie, die parallel zur radialen Ebene ist, in der magnetischen Rotorebene C liegt, d.h. in derjenigen Ebene, in welcher der Rotor 3 im Betriebszustand gelagert wird. Im Betriebszustand ist der Rotor 3 zwischen den Querschenkeln 42 der Spulenkerne 4 bzw. zwischen den Stirnflächen 421 der Querschenkel 42 berührungslos magnetisch gelagert.

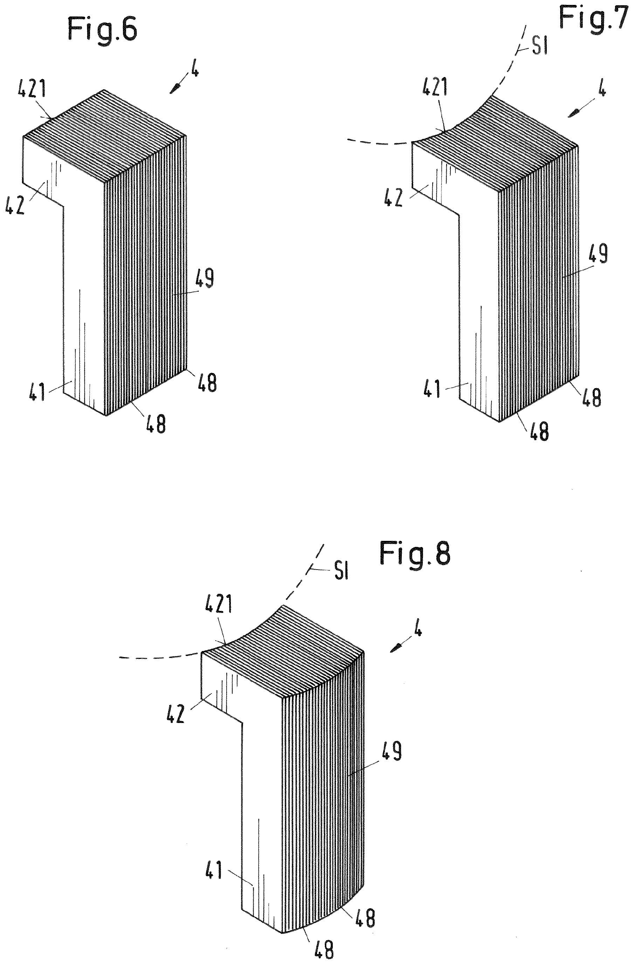

Der Rückschluss 5 bzw. seine Segmente 51 und die Spulenkerne 4 sind jeweils aus einem weichmagnetischen Material gefertigt, weil sie als Flussleitelemente zur Führung des magnetischen Flusses dienen. Geeignete weichmagnetische Materialien sind beispielsweise ferromagnetische oder ferrimagnetische Materialien, also insbesondere Eisen, Nickel-Eisen oder Silizium-Eisen. Hierbei ist eine Ausgestaltung als Statorblechpaket bevorzugt, bei welcher die einzelnen Spulenkerne 4 und die Segmente 51 geblecht ausgestaltet sind, das heisst sie bestehen aus mehreren dünnen Elementen, die gestapelt sind. Spezielle Ausgestaltungen der Spulenkerne 4 werden weiter hinten im Zusammenhang mit den Fig. 6-8 erläutert.

Wie dies auch Fig. 2 zeigt, sind die individuellen Spulenkerne 4 vorzugsweise so angeordnet, dass sie den Rotor 3 kreisförmig umgeben und auf diesem Kreis äquidistant angeordnet sind. Die Anzahl von sechs Spulenkernen 4 ist dabei beispielhaft zu verstehen. Es kann natürlich auch eine andere Anzahl von Spulenkernen 4 vorgesehen sein, beispielsweise acht oder zwölf oder vier Spulenkerne 4, wobei aus regelungstechnischen Gründen eine gerade Anzahl von Spulenkernen 4 bevorzugt ist. Für viele Anwendungen hat sich eine Anzahl von sechs oder acht oder zwölf Spulenkernen 4 als vorteilhaft erwiesen.

Die zueinander parallel ausgerichteten Längsschenkel 41 der Spulenkerne 4, die sich alle parallel zur axialen Richtung A erstrecken, und welche den Rotor 3 umgeben, sind es, welche dem Tempelmotor seinen Namen gegeben haben, weil diese parallelen Längsschenkel 41 an die Säulen eines Tempels erinnern.

Der Stator 2 umfasst ferner eine Mehrzahl von Wicklungen 6 zur Erzeugung von elektromagnetischen Drehfeldern, mit welchen der Rotor 3 berührungslos magnetisch antreibbar und berührungslos magnetisch bezüglich des Stators 2 lagerbar ist. Bei dem ersten Ausführungsbeispiel sind als Wicklungen 6 insgesamt sechs individuelle Spulen 61 vorgesehen, wobei an jedem der Längsschenkel 41 jeweils eine Spule 61 vorgesehen ist. Jede Spule 61 ist um den jeweiligen Längsschenkel 41 herum angeordnet, sodass die Spulenachse jeweils parallel zur axialen Richtung A und damit senkrecht zur magnetischen Rotorebene C liegt. Bei dem in Fig. 2 dargestellten ersten Ausführungsbeispiel trägt jeder Längsschenkel 41 genau eine Spule 61. Es sind natürlich auch solche Ausgestaltungen möglich, bei welchen jeder Längsschenkel 41 mehr als eine Spule 61 trägt.

Üblicherweise sind bei dem Tempelmotor 1 die Spulen 61 des Stators 2 ausserhalb der magnetischen Rotorebene C angeordnet, darstellungsgemäss (Fig. 2) unterhalb der magnetischen Rotorebene C. Vorzugsweise sind die Spulen 61 vollständig unterhalb des magnetisch wirksamen Kerns 31 angeordnet. Die Spulen 61 sind also nicht in der Ebene angeordnet, in welcher der Rotor 3 im Betriebszustand angetrieben und gelagert wird. Im Unterschied zu anderen elektromagnetischen Drehantrieben, bei welchen die Spulen des Stators so angeordnet sind, dass die Spulenachsen jeweils in der magnetischen Rotorebene liegen, also in der Ebene, in welcher der Rotor angetrieben und gelagert wird, sind beim Tempelmotor 1 die Spulen 61 des Stators 2 so angeordnet, dass die Achsen der Spulen 61 senkrecht auf der magnetischen Rotorebene C stehen.

Im Rahmen der vorliegenden Anmeldung ist also unter einer Ausgestaltung als Tempelmotor bzw. unter einem Tempelmotor 1 ein solcher elektromagnetischer Drehantrieb 1 zu verstehen, welcher eine Mehrzahl von Spulenkernen 4 aufweist, von denen jeder einen Längsschenkel 41 umfasst, der sich jeweils parallel zur axialen Richtung A erstreckt, wobei die ersten Enden 43 aller Spulenkerne 4 über den Rückschluss 5 miteinander verbunden sind, und wobei die Wicklungen 6, 61 des Stators 2 jeweils um die Längsschenkel 41 herum angeordnet sind, sodass die individuellen Spulen 61 jeweils mit ihrer Spulenachse parallel zur axialen Richtung A ausgerichtet sind. In einer bevorzugten Ausgestaltung ist der als Tempelmotor 1 ausgestaltete elektromagnetische Drehantrieb nach dem Prinzip eines lagerlosen Motors ausgestaltet ist. Der Tempelmotor 1 ist in diesem Falle also eine spezielle Ausgestaltung eines lagerlosen Motors.

Bei einem lagerlosen Motor 1 ist der Rotor 3 berührungslos magnetisch antreibbar und berührungslos magnetisch bezüglich des Stators 2 lagerbar. Dazu ist der Stator 2 als Lager- und Antriebsstator ausgestaltet, mit welchem der Rotor 3 im Betriebszustand berührungslos magnetisch um die Solldrehachse antreibbar - also in Rotation versetzbar- und bezüglich des Stators 2 berührungslos magnetisch lagerbar ist.

Der lagerlose Motor ist dem Fachmann mittlerweile hinlänglich bekannt, sodass eine detaillierte Beschreibung seiner Funktion nicht mehr notwendig ist. Mit dem Begriff lagerloser Motor ist gemeint, dass der Rotor 3 vollkommen magnetisch gelagert ist, wobei keine separaten Magnetlager vorgesehen sind. Der Stator 2 ist dazu als Lager- und Antriebsstator ausgestaltet, er ist also sowohl Stator des elektrischen Antriebs als auch Stator der magnetischen Lagerung. Dabei umfasst der Stator 2 die Wicklungen 6, mit denen sich ein magnetisches Drehfeld erzeugen lässt, welches zum einen ein Drehmoment auf den Rotor 3 ausübt, das dessen Rotation bewirkt, und welches zum anderen eine beliebig einstellbare Querkraft auf den Rotor 3 ausübt, sodass dessen radiale Position -also seine Position in der radialen Ebene- aktiv steuerbar bzw. regelbar ist. Somit sind zumindest drei Freiheitsgrade des Rotors 3 aktiv regelbar. Bezüglich seiner axialen Auslenkung in axialer Richtung A ist der Rotor 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der Rotor 3 ebenfalls passiv magnetisch stabilisiert. Der Rotor 3 ist also in axialer Richtung A sowie gegen Verkippungen (drei Freiheitsgrade) passiv magnetisch gelagert oder passiv magnetisch stabilisiert und in der radialen Ebene (zwei Freiheitsgrade) aktiv magnetisch gelagert. Eine aktive magnetische Lagerung ist eine solche die aktiv steuer- bzw. regelbar ist, während eine passive magnetische Lagerung eine solche ist, die nicht ansteuerbar bzw. regelbar ist.

Aus dem Stand der Technik, sind elektromagnetische Antriebs- und Lagervorrichtungen bekannt, bei welchen der Stator des Antriebs und der Stator der magnetischen Lagerung zu einer baulichen Einheit zusammengefügt sind. Dabei umfasst der Stator eine Lagereinheit, die aus einer oder mehreren Lagerebene(n) besteht, sowie eine Antriebseinheit, die zwischen oder neben diesen Lagerebenen angeordnet ist. Derartige Vorrichtungen zeigen also eine von der Antriebseinheit getrennte Lagereinheit, die ausschliesslich der magnetischen Lagerung dient. Derartige Vorrichtungen sind jedoch nicht als lagerlose Motoren im Sinne der vorliegenden Anmeldung zu verstehen, weil hier tatsächlich separate Lagereinheiten vorhanden sind, welche getrennt von der Antriebsfunktion die Lagerung des Rotors realisieren. Bei einem lagerlosen Motor im Sinne der vorliegenden Anmeldung ist es nicht möglich, den Stator in eine Lagereinheit und in eine Antriebseinheit aufzuteilen. Gerade diese Eigenschaft ist es ja, die dem lagerlosen Motor seinen Namen gibt.

Beim lagerlosen Motor wird im Unterschied zu klassischen Magnetlagern die magnetische Lagerung und der Antrieb des Motors über elektromagnetische Drehfelder realisiert, deren Summe zum einen ein Antriebsmoment auf den Rotor 3 erzeugen, sowie eine beliebig einstellbare Querkraft, mit welcher die radiale Position des Rotors 3 regelbar ist. Diese Drehfelder können entweder separat - also mit unterschiedlichen Spulen -, generiert werden, oder die Drehfelder können durch rechnerische Überlagerung der benötigten Ströme und dann mithilfe eines einzigen Spulensystems generiert werden. Es ist also bei einem lagerlosen Motor nicht möglich, den elektromagnetischen Fluss, der von den Spulen des Stators generiert wird, aufzuteilen in einen elektromagnetischen Fluss, der nur für den Antrieb des Rotors sorgt und einen elektromagnetischen Fluss, der nur die magnetische Lagerung des Rotors realisiert.

Der Rotor 3 des erfindungsgemässen Drehantriebs 1 ist spulenfrei ausgestaltet, d. h. auf dem Rotor 3 sind keine Wicklungen vorgesehen. Der Rotor 3 umfasst den magnetisch wirksamen Kern 31, der je nach Ausgestaltung von einer Kunststoffummantelung umgeben sein kann. Beispiele für die Ausgestaltung des Rotors werden weiter hinten noch erläutert.

Bei dem erfindungsgemässen Drehantrieb 1 weist der Rotor 3 bzw. der magnetisch wirksame Kern 31 des Rotors 3 keine Permanentmagnete auf, er ist also frei von Permanentmagneten. Auch der Stator 2 ist erfindungsgemäss frei von Permanentmagneten ausgestaltet, sodass der gesamte Drehantrieb 1 frei von Permanentmagneten, also ohne Permanentmagnete ausgestaltet ist. Diese Massnahme ermöglicht eine besonders kostengünstige Ausgestaltung des Drehantriebs 1, denn insbesondere sind für die Herstellung des Drehantriebs 1 keine Seltenen Erden wie z. B. Neodym oder Samarium, bzw. Verbindungen oder Legierungen dieser notwendig, die häufig für die Herstellung von Permanentmagneten verwendet werden. Der Verzicht auf diese Permanentmagnete im Drehantrieb 1 bedeutet auch unter Umweltaspekten einen grossen Vorteil.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff verstanden, der eine Koerzitivfeldstärke, genauer gesagt eine Koerzitivfeldstärke der magnetischen Polarisation aufweist, die mehr als 10'000 A/m beträgt.

Wenn der Rotor 3 und der Stator 2 also frei von Permanentmagneten sind, so bedeutet dies, dass der magnetisch wirksame Kern 31 des Rotors 3 und die Spulenkerne 4 sowie der Rückschluss 5 des Stators nur Materialien umfassen, deren Koerzitivfeldstärke höchstens 10'000 A/m beträgt.

Mit der Bezeichnung, dass der Rotor 3 und der Stator 2 "frei von Permanentmagneten" ausgestaltet sind, soll im Rahmen dieser Anmeldung verstanden werden, dass weder der Rotor 3 noch der Stator 2 Permanentmagnete umfassen, die einen wesentlichen Beitrag zum Antriebsfeld zum Antreiben der Rotation des Rotors 3 oder zur Generierung der magnetischen Lagerkräfte für den Rotor 3 leisten. Der generierte magnetische Fluss für den Antrieb und die Lagerung des Rotors 3 umfasst also keinen permanentmagnetisch erregten Fluss. Es ist natürlich möglich, dass der Rotor 3 und/oder der Stator 2 andere Magnete bzw. Permanentmagnete umfassen, beispielsweise in Sensoren, welche z. B. der Erfassung der Winkelstellung des Rotors dienen, oder die sonst einen Zweck erfüllen, der nichts mit dem Generieren des magnetischen Flusses für den Antrieb und die Lagerung des Rotors 3 zu tun hat. Die Bezeichnung "frei von Permanentmagneten" bezieht sich also nur auf die Generierung des magnetischen Flusses für den Antrieb und die Lagerung des Rotors.

Die Bezeichnung "frei von Permanentmagneten" bezüglich des Rotors bzw. ist im Rahmen dieser Anmeldung also so zu verstehen, dass der Rotor 3 bzw. der Stator 2 keine Permanentmagnete aufweist, welche einen Beitrag zum magnetischen Fluss leisten, mittels welchem der Rotor 3 angetrieben und magnetisch gelagert wird.

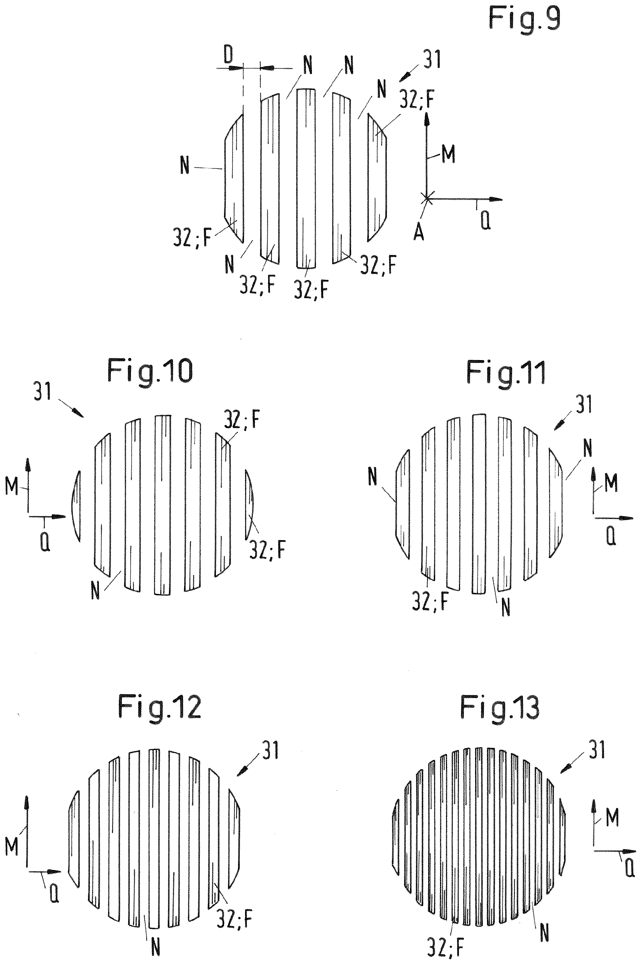

Erfindungsgemäss ist der Rotor 3 als ferromagnetischer oder ferrimagnetischer Rotor 3 ausgestaltet, welcher genau eine magnetische Vorzugsrichtung aufweist, die sich in radialer Richtung erstreckt. Die magnetische Vorzugsrichtung ist in Fig. 2 durch den Pfeil mit dem Bezugszeichen M angezeigt. Der magnetisch wirksame Kern 31 des Rotors 3 ist in Fig. 9 nochmals in einer schematischen Aufsicht dargestellt. Der magnetisch wirksame Kern 31 des Rotors 3 ist mit einer starken magnetischen Anisotropie seines magnetischen Widerstands (Reluktanz) bzw. seines magnetischen Leitwerts (Kehrwert der Reluktanz) ausgestaltet. In der magnetischen Vorzugsrichtung M weist der magnetisch wirksame Kern 31 einen magnetischen Widerstand auf, der deutlich geringer ist als sein magnetischer Widerstand in der radialen Richtung, welche senkrecht auf der magnetischen Vorzugsrichtung M steht. Insbesondere ist der magnetische Widerstand des magnetisch wirksamen Kerns 31 in der magnetischen Vorzugsrichtung M höchstens halb so gross, wie sein magnetischer Widerstand in der Richtung, welche senkrecht auf der magnetischen Vorzugsrichtung und senkrecht auf der axialen Richtung A steht. Diese radiale Richtung, die senkrecht auf der magnetischen Vorzugsrichtung M steht, wird im Folgenden auch als Querrichtung Q (Fig. 9) bezeichnet.

Je nach Ausführungsform kann die magnetische Anisotropie auch noch deutlich ausgeprägter sein. So kann der magnetische Widerstand des magnetisch wirksamen Kerns 31 in der Querrichtung Q mindestens viermal oder mindestens zehnmal oder mindestens hundertmal so gross sein wie der magnetische Widerstand des magnetisch wirksamen Kerns 31 in der der magnetischen Vorzugsrichtung M.

Da der magnetisch wirksame Kern 31 nur genau eine magnetische Vorzugsrichtung M hat, führt die magnetische Anisotropie im magnetischen Widerstand dazu, dass sich der permanentmagnetfreie Rotor 3 in einem Magnetfeld wie ein zweipoliger Rotor 3 verhält, also wie ein Rotor 3 mit der magnetischen Polpaarzahl eins.

Um die gewünschte magnetische Anisotropie des scheibenförmigen magnetisch wirksamen Kerns 31 des Rotors 3 zu realisieren, umfasst der magnetisch wirksame Kern 31 vorzugsweise ein ferromagnetisches Material F, das nur einen Teil des Gesamtvolumens des magnetisch wirksamen Kerns 31 ausmacht. Vorzugsweise hat das ferromagnetische Material F einen Volumenanteil von 30% bis 80% des Gesamtvolumens des magnetisch wirksamen Kerns 31. Dieser Volumenanteil, welcher von dem ferromagnetischen Material F eingenommen wird, wird im Folgenden auch als Füllgrad bezeichnet. Bevorzugt ist der Volumenanteil des ferromagnetischen Materials F 40% bis 75% des Gesamtvolumens des magnetisch wirksamen Kerns 31, wobei der Bereich von 50% bis70% besonders bevorzugt ist.

Das ferromagnetische Material F ist besonders bevorzugt ein weichmagnetisches Material, insbesondere Eisen, Nickel-Eisen oder Silizium-Eisen.

Der magnetisch wirksame Kern 31 des Rotors 3 umfasst ausser dem ferromagnetischen Material F ein niederpermeables Material N, also ein Material, das nur eine geringe magnetische Permeabilität (magnetische Leitfähigkeit) aufweist. Dieses niederpermeable Material N kann beispielsweise Luft sein, oder ein Kunststoff, oder ein paramagnetisches Metall oder ein diamagnetisches Metall, oder auch Kombinationen dieser Materialien. Als niederpermeabel werden im Rahmen dieser Anmeldung -wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl die kleiner als 1.1 ist. Das niederpermeable Material N bzw. diejenigen Bereiche des magnetisch wirksamen Kerns 31, die aus dem niederpermeablen Material N bestehen, bilden Flussbarrieren für den magnetischen Fluss, weil das niederpermeable Material eine deutlich geringere magnetische Leitfähigkeit aufweist als das ferromagnetische Material F.

In einer besonders bevorzugten Ausführungsform, die auch in Fig. 2 illustriert ist, weist der magnetisch wirksame Kern 31 des Rotor 3 eine Mehrzahl von stabförmigen ferromagnetischen Elementen 32 auf, die sich jeweils senkrecht zur axialen Richtung A erstrecken, und die parallel sowie beabstandet zueinander angeordnet sind. Die ferromagnetischen Elemente 32 bestehen aus dem ferromagnetischen Material F. Jedes der stabförmigen ferromagnetischen Elemente 32 ist also in der magnetischen Rotorebene C angeordnet, wobei sich alle stabförmigen ferromagnetischen Elemente 32 parallel zueinander in der magnetischen Vorzugsrichtung M erstrecken. In der Querrichtung Q ist zwischen zwei benachbarten ferromagnetischen Elementen 32 jeweils ein Abstand D (Fig. 9) vorgesehen. Der Raum zwischen zwei benachbarten stabförmigen ferromagnetischen Elementen 32 ist jeweils mit dem niederpermeablen Material N gefüllt, welches somit jeweils Flussbarrieren zwischen benachbarten ferromagnetischen Elementen 32 bildet.

Vorzugsweise ist jedes stabförmige ferromagnetische Element 32 so ausgestaltet, dass es bezüglich der Kreisfläche des scheibenförmigen magnetisch wirksamen Kerns 31 des Rotors 3 im Wesentlichen eine Sekante bildet, d.h. jedes ferromagnetische Element 32 erstreckt sich bezüglich der magnetischen Vorzugsrichtung M vollständig durch den magnetisch wirksamen Kern 31 des Rotors 3. Bezüglich der axialen Richtung A hat jedes ferromagnetische Element 32 eine Erstreckung, die zumindest im Wesentlichen mit der axialen Höhe HR (siehe Fig. 4) des magnetisch wirksamen Kerns 31 übereinstimmt. Ferner sind die stabförmigen ferromagnetischen Elemente 32 vorzugsweise äquidistant über den magnetisch wirksamen Kern 31 verteilt, d.h. der Abstand D zwischen zwei benachbarten ferromagnetischen Elementen 32 in Querrichtung Q ist für alle Paare von benachbarten ferromagnetischen Elementen 32 gleich.

In Fig. 2 und in Fig. 9 sind aus Gründen der besseren Übersichtlichkeit von dem magnetisch wirksamen Kern 31 des Rotors 3 jeweils nur die stabförmigen ferromagnetischen Elemente 32 explizit dargestellt. Diejenigen Bereiche des magnetisch wirksamen Kerns 31, die aus dem niederpermeablen Material N bestehen, sind jeweils durch Leerräume dargestellt. Die Darstellung in Fig. 2 und Fig. 9 ist also so zu verstehen, dass alle diejenigen Bereiche des magnetisch wirksamen Kerns 31, welche nicht von den ferromagnetischen Elementen 32 eingenommen werden, und welche den magnetischen Kern 31 zu einer vollständigen Kreisscheibe ergänzen, aus dem niederpermeablen Material N bestehen.

Bei der in Fig. 2 und Fig. 9 dargestellten Ausführungsform des magnetisch wirksamen Kerns 31 des Rotors 3 sind fünf parallele stabförmige ferromagnetische Elemente 32 vorgesehen. Der Füllgrad beträgt etwa 50%, das heisst, der magnetisch wirksame Kern 31 besteht zu etwa 50% aus dem ferromagnetischen Material F und zu etwa 50% aus dem niederpermeablen Material N.

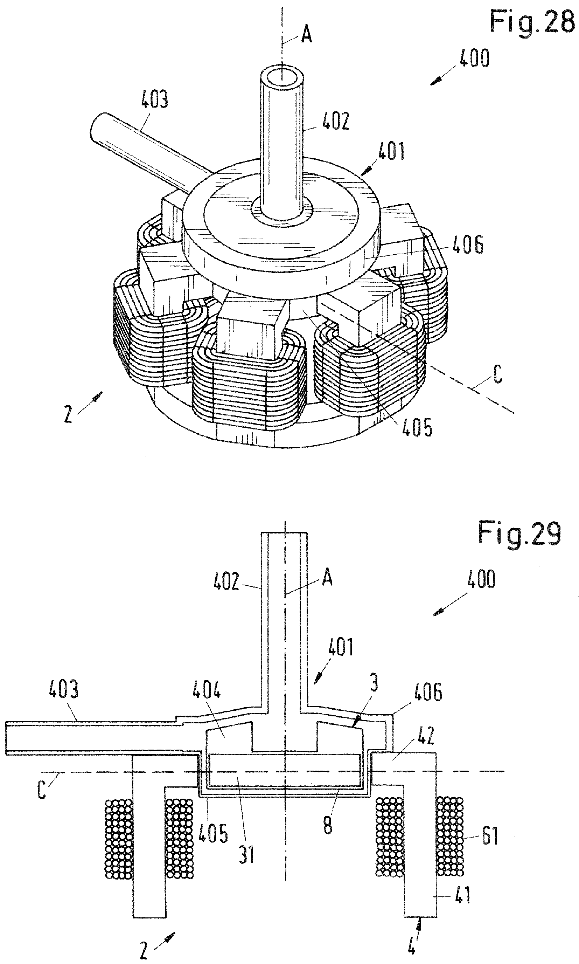

Der magnetisch wirksame Kern 31 ist vorzugsweise mit einer Ummantelung (nicht dargestellt, siehe aber z.B. Fig. 29) versehen, welche den magnetisch wirksamen Kern 31 vollständig umkapselt. An dieser Ummantelung können die stabförmigen ferromagnetischen Elemente 32 befestigt sein. Es ist auch möglich, dass als niederpermeables Material N für den magnetisch wirksamen Kern 31 ein Kunststoff verwendet wird. Dann können in einem entsprechend scheibenförmig geformten Kunststoffteil Ausnehmungen vorgesehen werden, in welche die stabförmigen ferromagnetischen Elemente 32 eingelegt werden, sodass sie fixiert sind. Die Stege zwischen den Ausnehmungen in dem Kunststoffteil bilden dann die Flussbarrieren zwischen benachbarten ferromagnetischen Elementen. Natürlich ist es auch möglich, dass ein solches Kunststoffteil einstückig mit der Ummantelung für den magnetisch wirksamen Kern 31 ausgestaltet ist.

Die ferromagnetischen Elemente 32 des magnetisch wirksamen Kerns 31 können z.B. durch Giessen, Stanzen, Pressen von weichmagnetischem Pulver mit anschliessendem Sintern, Schmieden, Umformen oder Zusammensetzen von Teilen wie Blechen hergestellt werden.

Bei der in Fig. 2 dargestellten Ausführungsform mit dem scheibenförmigen magnetisch wirksamen Kern 31 des Rotors 3 ist der Rotor 3 bezüglich dreier Freiheitsgrade aktiv magnetisch, d. h. ansteuerbar gelagert. Dies sind die beiden Freiheitsgrade der radialen Position des Rotors 3 in der radialen Ebene sowie der Freiheitsgrad der Rotation. Bezüglich der drei anderen Freiheitsgrade ist der Rotor 3 rein passiv magnetisch, also nicht ansteuerbar, über Reluktanzkräfte stabilisiert bzw. gelagert. Dies sind die beiden Freiheitsgrade der Verkippungen des Rotors 3 bezüglich der radialen Ebene sowie die axiale Position des Rotors 3, also seine Lage bezüglich der axialen Richtung A.

Insbesondere im Hinblick auf die passive magnetische Stabilisierung des Rotors 3 gegen Verkippungen ist es bevorzugt, dass der scheibenförmige magnetisch wirksame Kern 31 des Rotors 3 einen Durchmesser DR aufweist, der mindestens doppelt so gross ist wie die axiale Höhe HR des magnetisch wirksamen Kerns 31. Besonders bevorzugt ist der Durchmesser DR des magnetisch wirksamen Kerns 31 mindestens um das 2,4-fache grösser als seine axialen Höhe HR in axialer Richtung A.

Klassischerweise wird in einem lagerlosen Motor, also auch bei der speziellen Ausgestaltung als Tempelmotor 1, die magnetische Antriebs- und Lagerfunktion durch die Überlagerung zweier magnetischer Drehfelder generiert, die üblicherweise als Antriebs- und Steuerfeld bezeichnet werden. Diese beiden mit den Wicklungen 6 bzw. Spulen 61 des Stators 2 erzeugten Drehfelder haben in der Regel eine Polpaarzahl, die sich um eins unterscheidet. Dabei werden mit dem Antriebsfeld auf den Rotor 3 in der radialen Ebene wirkende Tangentialkräfte erzeugt, die ein Drehmoment bewirken, was die Rotation des Rotors 3 um die axiale Richtung A bewirkt. Durch die Überlagerung des Antriebsfelds und des Steuerfelds lässt sich zusätzlich eine beliebig einstellbare Querkraft auf den Rotor 3 in der radialen Ebene erzeugen, mit welcher die Position des Rotors 3 in der radialen Ebene regelbar ist.

Zur Generierung des Antriebs- und des Steuerfelds ist es einerseits möglich, zwei unterschiedliche Wicklungssysteme zu verwenden, nämlich eines zur Erzeugung des Antriebsfelds und eines zur Erzeugung des Steuerfelds. Die Spulen zur Erzeugung des Antriebsfelds werden dann üblicherweise als Antriebsspulen bezeichnet und die Spulen zur Erzeugung des Steuerfelds als Steuerspulen. Der Strom, der in diese Spulen eingeprägt wird, wird dann als Antriebsstrom bzw. als Steuerstrom bezeichnet. Andererseits ist es aber auch möglich, die Antriebs- und Lagerfunktion mit nur einem einzigen Wicklungssystem zu generieren, sodass es also keine Unterscheidung zwischen Antriebs- und Steuerspulen gibt. Dies kann so realisiert werden, dass die von der Kontrolleinrichtung jeweils ermittelten Werte für den Antriebs- und den Steuerstrom rechnerisch -also z. B. mit Hilfe von Software - addiert bzw. überlagert werden und der sich daraus ergebende Gesamtstrom in die jeweilige Spulen eingeprägt wird. In diesem Fall ist es natürlich nicht mehr möglich, zwischen Steuer- und Antriebsspulen zu unterscheiden. In dem hier beschriebenen Ausführungsbeispiel ist die letztgenannte Variante realisiert, das heisst, es gibt keine Unterscheidung zwischen Antriebs- und Steuerspulen, sondern es gibt nur ein Wicklungssystem, in dessen Spulen 61 die rechnerisch ermittelte Summe aus dem Antriebs- und dem Steuerstrom eingeprägt wird. Es ist aber natürlich auch möglich, den erfindungsgemässen Drehantrieb 1 mit zwei getrennten Wicklungssystemen, nämlich jeweils mit separaten Antriebsspulen und separaten Steuerspulen auszugestalten.

Erfindungsgemäss sind sowohl der Rotor 3 als auch der Stator 2 frei von Permanentmagneten ausgestaltet. Der magnetische Fluss, der für den Antrieb und die magnetische Lagerung des Rotors 3 benötigt wird, ist daher ein rein elektromagnetischer Fluss, welcher mittels der Wicklungen 6 bzw. mittels der Spulen 61 generiert wird.

Im Betriebszustand werden in der vom lagerlosen Motor bekannten Weise mittels der Spulen 61 elektromagnetische Drehfelder erzeugt, mit welchen zum einen eine Tangentialkraft auf den Rotor 3 generiert wird, welche ein Drehmoment bewirkt, das die Rotation des Rotors 3 antreibt, und mit welchen zum anderen eine beliebig einstellbare Querkraft in radialer Richtung auf den Rotor 3 ausübbar ist, mit welcher die Position des Rotors 3 in der radialen Ebene aktiv magnetisch regelbar ist.

Um den ferromagnetischen Rotor 3 zu magnetisieren, ist es beispielsweise möglich, mittels der Spulen 61 zusätzlich einen nicht Drehmoment bildenden Statorstrom zu generieren, welcher mit dem Rotor 3 mitdreht.

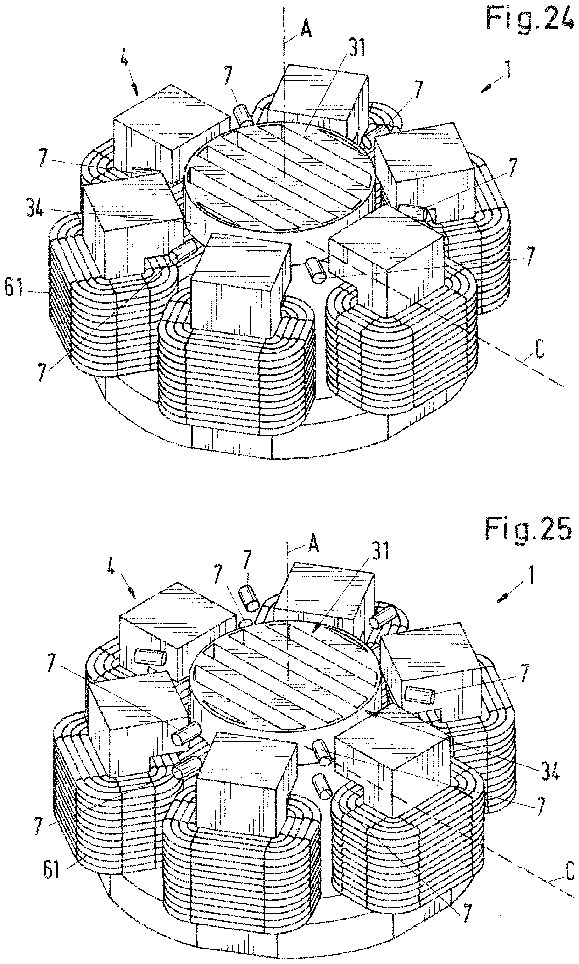

Die für die Ansteuerung der Spulen 61 benötigte Leistungselektronik sowie die entsprechenden Kontroll- und Regeleinrichtungen sind dem Fachmann hinlänglich bekannt und brauchen daher hier nicht näher erläutert zu werden. Auf die Ausgestaltung bzw. die Anordnung der Sensorik, mit welcher die radiale Position und die Winkelstellung des Rotors 3 detektiert werden kann, wird weiter hinten im Zusammenhang mit den Fig. 24-27 noch eingegangen.

Im Betriebszustand wird der von den Wicklungen 6 bzw. den Spulen 61 generierte elektromagnetische Fluss für den Antrieb und die Lagerung des Rotors 3 durch die Stirnflächen 421 der Querschenkel 42 zum magnetisch wirksamen Kern 31 des Rotors 3 geführt. Der von einer auf dem Längsschenkel 41 eines individuellen Spulenkerns 4 angeordneten Spule 61 durch Bestromung generierte elektromagnetische Fluss wird durch den Längsschenkel 41 und den Querschenkel 42 in radialer Richtung nach innen auf den magnetischen Kern 31 des Rotors 3 zu geführt, durchquert den Luftspalt zwischen diesen Spulenkern 4 und dem magnetisch wirksamen Kern 31 des Rotors 3, wird von stabförmigen ferromagnetischen Elementen 32 wieder in den Luftspalt geführt und gelangt somit wieder zu einem der Spulenkerne 4 und dem Rückschluss 5, wodurch sich die Feldlinien schliessen.

Bei dem ersten Ausführungsbeispiel gemäss Fig. 2 sind die dem Rotor 3 zugewandten Stirnflächen 421 der Querschenkel 42 jeweils als plane, das heisst ungekrümmte, Flächen ausgestaltet. Jede Stirnfläche 421 weist in axialer Richtung A gesehen eine Höhe HS auf, die im Wesentlichen gleich gross ist wie die axiale Höhe HR des magnetisch wirksamen Kerns 31 des Rotors 3 (siehe auch Fig. 4).

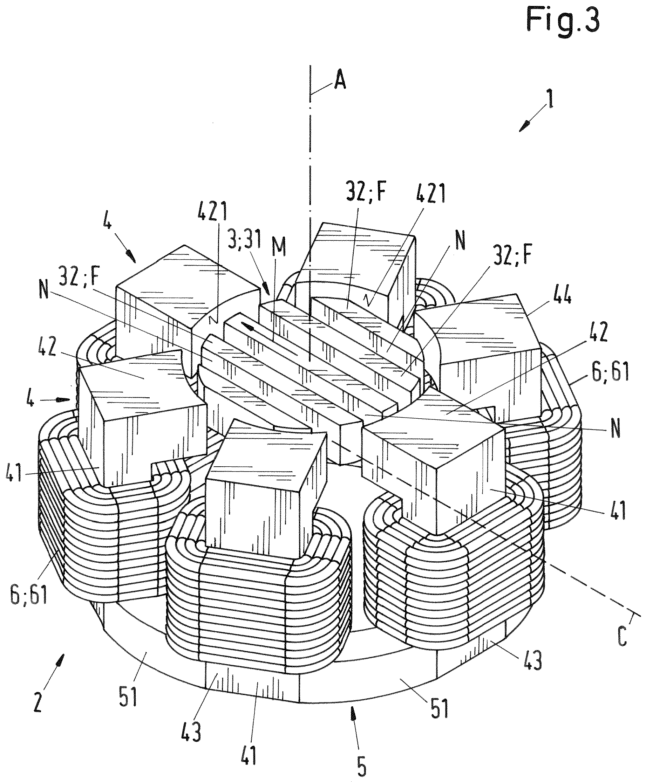

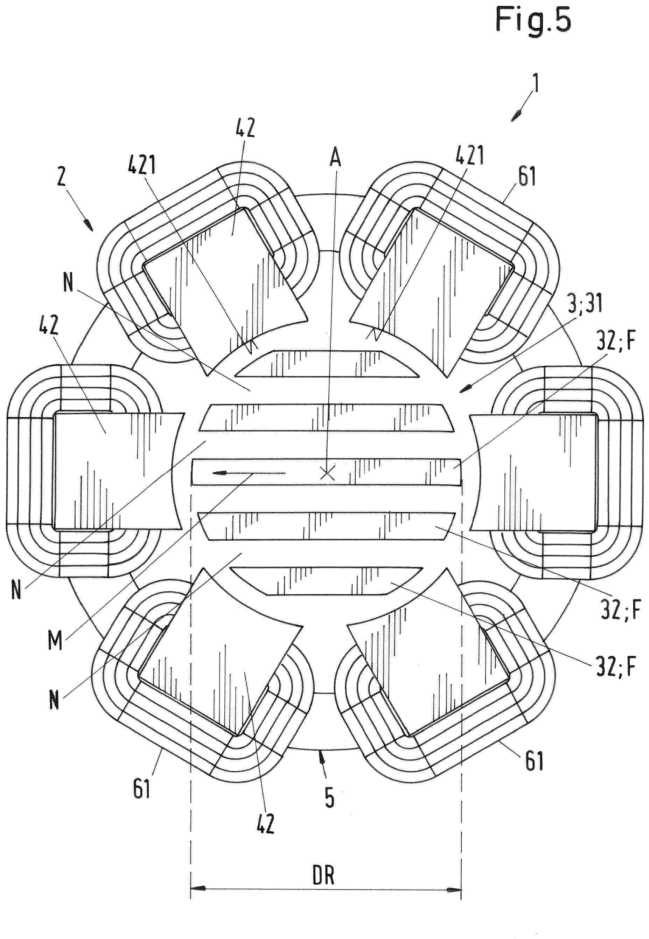

Fig. 3 zeigt in einer perspektivischen Darstellung ein zweites Ausführungsbeispiel eines erfindungsgemässen Drehantriebs 1. Zum besseren Verständnis zeigen Fig. 4 eine schematische Darstellung eines Schnitts in axialer Richtung A durch dieses zweite Ausführungsbeispiel und Fig. 5 eine Aufsicht auf das zweite Ausführungsbeispiels aus der axialen Richtung A. Im Folgenden wird nur auf die Unterschiede zu dem ersten Ausführungsbeispiel eingegangen. Insbesondere haben die Bezugszeichen die gleiche Bedeutung wie sie bereits im Zusammenhang mit den ersten Ausführungsbeispielen erläutert sind. Es versteht sich, dass alle vorangehenden Erläuterungen in gleicher Weise oder in sinngemäss gleicher Weise auch für das zweite Ausführungsbeispiel gelten.

Das zweite Ausführungsbeispiel unterscheidet sich von dem ersten Ausführungsbeispiel durch die Ausgestaltung der Querschenkel 42 mit den Stirnflächen 421. Bei dem zweiten Ausführungsbeispiel ist bei jedem Spulenkern 4 die dem Rotor 3 zugewandte Stirnfläche 421 des Querschenkels 42 in axialer Richtung gesehen mit einer Höhe HS (Fig. 4) ausgestaltet, die grösser ist als die axiale Höhe HR des magnetisch wirksamen Kerns 31 des Rotors 3, sodass jede dieser Stirnflächen 421 die ihr zugewandte Aussenfläche des magnetisch wirksamen Kerns 31 des Rotors 3 bezüglich der axialen Richtung A nach oben und nach unten überragen. Dies ist besonders gut in Fig. 4 zu erkennen.

Diese Ausgestaltung mit der Höhe HS grösser als die axiale Höhe HR ist insbesondere im Hinblick auf die passive magnetische Stabilisierung des Rotors 3 gegen Verkippungen und gegen Auslenkungen bezüglich der axialen Richtung A besonders vorteilhaft. Da die Stirnflächen 421 in axialer Richtung A eine grössere Ausdehnung haben als der magnetisch wirksame Teil 31 des Rotors 3, ist der Rotor 3 deutlich besser gegen Verkippungen bezüglich der axialen Richtung A bzw. gegen Verschiebungen in axialer Richtung A passiv magnetisch stabilisiert. Des Weiteren lässt sich durch die grössere Stirnfläche 421 (grösser im Vergleich zum ersten Ausführungsbeispiel) auch ein grösserer magnetischer Fluss leiten, und beim Übergang von der Stirnfläche 421 zum magnetisch wirksamen Kern 31 kommt es zu einer vorteilhaften Flusskonzentration.

Ein weiterer Unterschied zum ersten Ausführungsbeispiel besteht darin, dass bei dem zweiten Ausführungsbeispiel die dem Rotor 3 zugewandten Stirnflächen 421 der Querschenkel 42 der Spulenkerne 4 jeweils gekrümmt als Segmente eines Kreiszylinders ausgestaltet sind, welcher koaxial mit dem Rotor 3 ist. Dadurch wird erreicht, dass der magnetisch wirksame Kern 31 - wenn der Rotor 3 in einem zentrierten Zustand ist - über die jeweilige Stirnflächen 421 gesehen einen konstanten Abstand in radialer Richtung von dieser Stirnfläche 421 hat. Das heisst, in Umfangsrichtung des Rotors 3 gesehen ist der radiale Abstand zwischen dem magnetisch wirksamen Kern 31 und der Stirnfläche 421 über die gesamte Stirnfläche 421 konstant.

Durch diese gekrümmte Ausgestaltung der Stirnflächen 421, welche der Krümmung des magnetisch wirksamen Kerns 31 folgt, wird zum einen der effektive magnetische Luftspalt zwischen dem Stator 2 und dem Rotor 3 möglichst klein ausgestaltet. Zum anderen wird durch den über den Umfang des magnetisch wirksamen Kerns 31 gesehen konstante Abstand zwischen dem magnetisch wirksamen Kern 31 und den Stirnflächen 421 der Querschenkel 42 das auf den Rotor 3 ausgeübte Drehmoment über die Umdrehung des Rotors 3 gesehen besonders konstant, das heisst Fluktuationen des Drehmoments werden zumindest deutlich reduziert. Hierdurch werden auch Drehmomentrippel und Rastmomente deutlich reduziert.

Im Folgenden werden anhand der Fig. 6-8 verschiedene Varianten für die bevorzugte Ausgestaltung der Spulenkerne 4 mit den Längsschenkeln 41 und den Querschenkeln 42 erläutert, Wie bereits erwähnt, sind die Spulenkerne 4 vorzugsweise aus einem weichmagnetischen Material gefertigt, welches den magnetischen Fluss gut leitet. Bevorzugte weichmagnetische Materialien umfassen Eisen, Nickel-Eisen oder Silizium-Eisen.

Vorzugsweise sind die Spulenkerne 4 jeweils geblecht ausgestaltet. Dies ist in jeder der Fig. 6-8 zu erkennen, die jeweils eine Variante für die Ausgestaltung des Spulenkerns 4 in einer perspektivischen Darstellung zeigt. Bei der geblechten Ausgestaltung ist der Spulenkern 4 aus einer Mehrzahl von dünnen Elementen 48 aufgebaut, die parallel zueinander aufeinander gestapelt sind. Alle Elemente 48 sind identisch ausgestaltet, also jeweils L-förmig und auch mit der gleichen Dicke. Wie dies in den Fig. 6-8 zu erkennen ist, sind die Elemente 48 in Umfangsrichtung des Rotors 3 bzw. des Stators 2 gestapelt. Eine Mehrzahl paralleler Elemente 48 bildet also den Spulenkern 4. Damit die einzelnen Elemente 48 zusammenhalten, können sie verklebt oder mit einem Kunststoff vergossen werden. Durch diese geblechte Ausgestaltung lassen sich Wirbelströme in den Spulenkernen 4 wirkungsvoll unterbinden bzw. deutlich reduzieren.

Bei der in Fig. 6 dargestellten Variante, welche dem Spulenkern 4 entspricht, der in Fig. 2 für das erste Ausführungsbeispiel gezeigt ist, sind die dem Rotor 3 zugewandte Stirnfläche 421 des Querschenkels 42 sowie die radial äussere Begrenzungsfläche 49 des Spulenkerns 4 jeweils als plane, das heisst ungekrümmte, Fläche ausgestaltet. Diese Variante lässt sich herstellen, indem eine Mehrzahl identischer Elemente 48, von denen jedes L-förmig ausgestaltet ist, deckungsgleich übereinandergestapelt und dann zur Fixierung miteinander verklebt oder vergossen werden.

Bei der in Fig. 7 dargestellten Variante, welche dem Spulenkern 4 entspricht, der in den Fig. 3-5 für das zweite Ausführungsbeispiel gezeigt ist, ist die dem Rotor 3 zugewandten Stirnfläche 421 der Querschenkel 42 der Spulenkerne 4 gekrümmt als Segment eines Kreiszylinders ausgestaltet, welcher koaxial mit dem Rotor 3 ist. Die radial äussere Begrenzungsfläche 49 des Spulenkerns 4 ist als plane, das heisst ungekrümmte, Fläche ausgestaltet.

In Fig. 7 ist der Innenkreis, entlang welchem sich die Stirnfläche 421 des Querschenkels 42 erstreckt, durch den Kreis mit dem Bezugszeichen SI angedeutet. Dieser Kreis SI ist konzentrisch mit dem scheibenförmigen magnetisch wirksamen Kern 31 des Rotors, d.h. der Mittelpunkt des Kreises SI liegt auf der Solldrehachse des Rotors 3. Dadurch folgt die Krümmung der Stirnfläche 421 der Krümmung der Aussenfläche des magnetisch wirksamen Kerns 31 des Rotors3.

Zur Herstellung der in Fig. 7 gezeigten Variante kann beispielsweise von der in Fig. 6 dargestellten Variante ausgegangen werden. Dann wird die plane Stirnfläche 421 der Variante aus Fig. 6 durch eine spanabhebende Bearbeitung, z. B. durch Fräsen, so bearbeitet, dass sich die gekrümmte Stirnfläche 421 der Variante aus Fig. 7 ergibt.

Bei der in Fig. 8 dargestellten Variante sind sowohl die dem Rotor 3 zugewandte Stirnfläche 421 des Querschenkels 42 als auch die radial äussere Begrenzungsfläche 49 des Spulenkerns 4 jeweils gekrümmt als Segment eines Kreiszylinders ausgestaltet, welcher jeweils koaxial mit dem Rotor 3 ist.

Eine derartige Ausgestaltung lässt sich beispielsweise dadurch realisieren, dass die individuellen und identischen Elemente 48 bezüglich der radialen Richtung sukzessive leicht gegeneinander verschoben werden, um so die Krümmung der Stirnfläche 421 und die Krümmung der äusseren Begrenzungsfläche 49 des Spulenkerns zu realisieren bzw. anzunähern. Die individuellen Elemente 48 werden dazu jeweils so in radialer Richtung gegeneinander verschoben, dass sie mit ihren die Stirnfläche 421 bildenden Enden der Kontur des Innenkreises SI folgen.

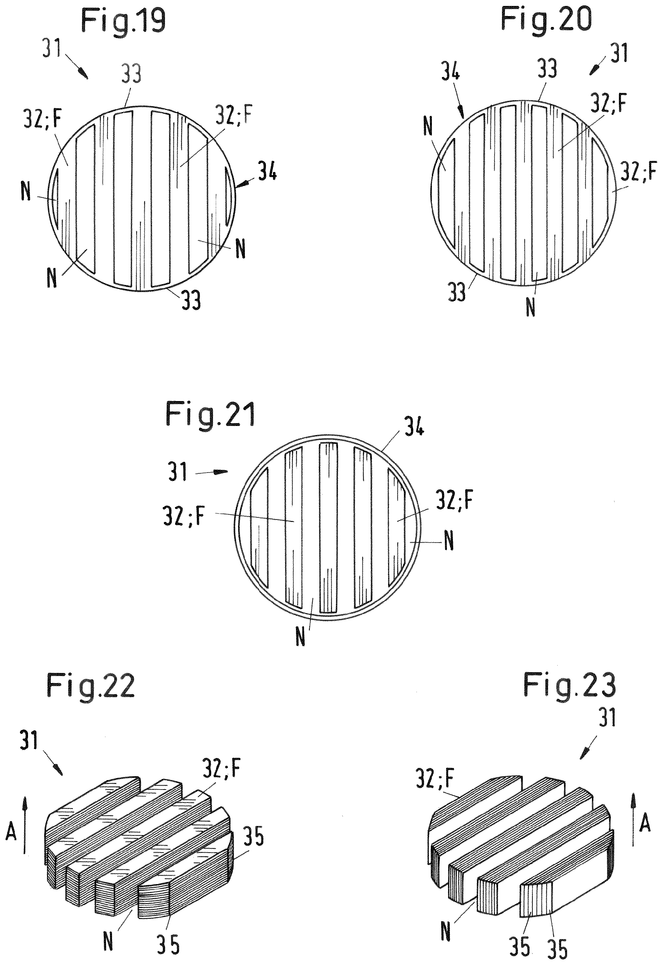

Im Folgenden werden nun anhand der Fig. 9-21 verschiedene Varianten für die Ausgestaltung des Rotors 3, genauer gesagt für die Ausgestaltung des magnetisch wirksamen Kerns 31 des Rotors 3 erläutert. Der Rotor 3 ist spulenfrei und frei von Permanentmagneten als Reluktanzläufer ausgestaltet. Wie bereits erwähnt, sind die Bestandteile des magnetisch wirksamen Kerns 31 des Rotors, welche aus dem ferromagnetischen Material F bestehen, aus einem weichmagnetischen Material gefertigt, beispielsweise aus Eisen, Nickel-Eisen oder Silizium-Eisen. Dabei können diese aus dem ferromagnetischen Material F bestehenden Teile, also z. B. die stabförmigen ferromagnetischen Elemente 32, durch Giessen, Stanzen, Pressen von weichmagnetischem Pulver mit anschliessendem Sintern, Schmieden, Umformen oder Zusammensetzen von Teilen wie Blechen hergestellt werden. Insbesondere können die aus dem ferromagnetischen Material F bestehenden Teile des magnetisch wirksamen Kern 31 des Rotor 3 also auch, in analoger Weise wie bezüglich der Spulenkerne 4 erläutert wurde, geblecht ausgestaltet sein, also aus mehreren dünnen Elementen, die dann zueinander parallel gestapelt und beispielsweise durch eine Kunststoffummantelung bzw. durch ein Vergiessen in Kunststoff fixiert werden (siehe Fig. 22 und Fig. 23).

Ausser den Teilen, welche aus dem ferromagnetischen Material F gefertigt sind, umfasst der magnetisch wirksame Kern 31 auch Teile oder Bereiche die aus dem niederpermeablen Material N bestehen und jeweils eine Flussbarriere bilden. Das niederpermeable kann beispielsweise Luft sein, oder ein Kunststoff, oder ein paramagnetisches Metall oder ein diamagnetisches Metall, oder auch Kombinationen dieser Materialien. Es können also auch mehrere verschiedene niederpermeable Materialien N in dem magnetisch wirksamen Kern 31 vorgesehen sein.

In den Fig. 9-23 sind aus Gründen der besseren Übersichtlichkeit von dem magnetisch wirksamen Kern 31 des Rotors 3 jeweils nur die Teile explizit dargestellt, die aus dem ferromagnetischen Material F bestehen, also z. B. die stabförmigen ferromagnetischen Elemente 32. Diejenigen Bereiche des magnetisch wirksamen Kerns 31, die aus dem niederpermeablen Material N bestehen, sind jeweils durch Leerräume dargestellt. Die Darstellungen in den Fig. 9-23 sind also jeweils so zu verstehen, dass alle diejenigen Bereiche des magnetisch wirksamen Kerns 31, welche nicht von den Teilen eingenommen werden, die aus dem ferromagnetischen Material F bestehen, und welche den magnetischen Kern 31 zu einer vollständigen Kreisscheibe ergänzen, aus dem niederpermeablen Material N bestehen.

In allen den in den Fig. 9-21 dargestellten Varianten ist die besonders bevorzugte Ausführungsform realisiert, die auch schon im Zusammenhang mit Fig. 2 erläutert wurde. Gemäss dieser besonders bevorzugten Ausführungsform weist der magnetisch wirksame Kern 31 des Rotor 3 eine Mehrzahl von stabförmigen ferromagnetischen Elementen 32 auf, die sich jeweils senkrecht zur axialen Richtung A erstrecken, und die parallel sowie beabstandet zueinander angeordnet sind. Die ferromagnetischen Elemente 32 bestehen aus dem ferromagnetischen Material F. Jedes der stabförmigen ferromagnetischen Elemente 32 ist also in der magnetischen Rotorebene C angeordnet, wobei sich alle stabförmigen ferromagnetischen Elemente 32 parallel zueinander in der magnetischen Vorzugsrichtung M erstrecken. In der Querrichtung Q ist zwischen zwei benachbarten ferromagnetischen Elementen 32 jeweils der Abstand D vorgesehen. Der Raum zwischen zwei benachbarten stabförmigen ferromagnetischen Elementen 32 ist jeweils mit dem niederpermeablen Material N gefüllt, welches somit jeweils eine Flussbarriere zwischen benachbarten ferromagnetischen Elementen 32 bildet.

Vorzugsweise ist jedes stabförmige ferromagnetische Element 32 so ausgestaltet, dass es bezüglich der Kreisfläche des scheibenförmigen magnetisch wirksamen Kerns 31 des Rotors 3 im Wesentlichen eine Sekante bildet, d.h. jedes ferromagnetische Element 32 erstreckt sich bezüglich der magnetischen Vorzugsrichtung M vollständig durch den magnetisch wirksamen Kern 31 des Rotors 3. Bezüglich der axialen Richtung A hat jedes ferromagnetische Element 32 eine Erstreckung, die zumindest im Wesentlichen mit der axialen Höhe HR (siehe Fig. 4) des magnetisch wirksamen Kerns 31 übereinstimmt. Die Breite der ferromagnetischen Elemente 32, d. h. ihre (maximale) Erstreckung in der Querrichtung Q, kann für alle ferromagnetischen Elemente 32 gleich sein. Es ist auch möglich, dass die beiden aussen liegenden ferromagnetischen Elemente 32 -aus geometrischen Gründen-jeweils eine andere insbesondere kleinere Breite aufweisen als die übrigen ferromagnetischen Elemente 32.

Ferner sind die stabförmigen ferromagnetischen Elemente 32 vorzugsweise äquidistant über den magnetisch wirksamen Kern 31 verteilt, d.h. der Abstand D (Fig. 9) zwischen zwei benachbarten ferromagnetischen Elementen 32 in Querrichtung Q ist für alle Paare von benachbarten ferromagnetischen Elementen 32 gleich.

Bei den in den Fig. 9-13 dargestellten Varianten beträgt der Füllgrad jeweils etwa 50%, das heisst der magnetisch wirksame Kern 31 des Rotors 3 besteht etwa zu Hälfte aus dem ferromagnetischen Material F und zur Hälfte aus dem niederpermeablen Material N. Dies kann beispielsweise dadurch realisiert werden, dass der Abstand D zwischen zwei benachbarten stabförmigen ferromagnetischen Elementen 32 gleich gross gewählt wird wie die Breite der stabförmigen ferromagnetischen Elemente 32 in Querrichtung Q.

Fig. 9 zeigt eine Variante, bei welcher fünf stabförmige ferromagnetische Elemente 32 vorgesehen sind.

Fig. 10 zeigt eine Variante, bei welcher sieben stabförmige ferromagnetische Elemente 32 vorgesehen sind, wobei der magnetisch wirksame Kern 31 in Querrichtung Q gesehen mit einem stabförmigen ferromagnetischen Element 32 beginnt und mit einem stabförmigen ferromagnetischen Element 32 endet.

Fig. 11 zeigt eine Variante, bei welcher sieben stabförmige ferromagnetische Elemente 32 vorgesehen sind, wobei der magnetisch wirksame Kern 31 in Querrichtung Q gesehen mit einer Flussbarriere aus dem niederpermeablen Material N beginnt und mit einer Flussbarriere aus dem niederpermeablen Material N endet.

Fig. 12 zeigt eine Variante, bei welcher neun stabförmige ferromagnetische Elemente 32 vorgesehen sind.

Fig. 13 zeigt eine Variante, bei welcher fünfzehn stabförmige ferromagnetische Elemente 32 vorgesehen sind.

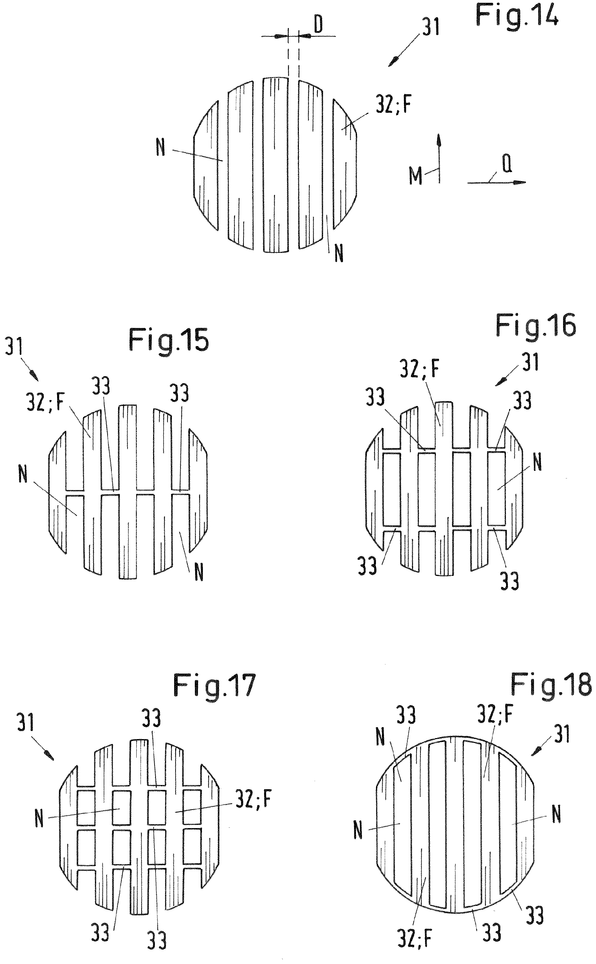

Fig. 14 zeigt eine Variante, bei welcher der Füllgrad etwa 70% beträgt, das heisst der magnetisch wirksame Kern 31 des Rotors 3 besteht etwa zu 70% aus dem ferromagnetischen Material F und zu 30% aus dem niederpermeablen Material N. Dies kann beispielsweise dadurch realisiert werden, dass der Abstand D zwischen zwei benachbarten stabförmigen ferromagnetischen Elementen 32 entsprechend kleiner gewählt wird wie die Breite der stabförmigen ferromagnetischen Elemente 32 in Querrichtung Q.

In den Fig. 15 - 18 sind Varianten gezeigt, bei welchen der magnetisch wirksame Kern 31 jeweils eine Mehrzahl von Querstegen 33 aufweist, von denen jeder zwei benachbarte stabförmige ferromagnetische Elemente 32 miteinander verbindet. Vorzugsweise sind die Querstege 33 auch aus dem ferromagnetischen Material F gefertigt, sodass sie gemeinsam mit den stabförmigen ferromagnetischen Elementen 32 hergestellt werden können. Die Querstege 33 sind geometrisch so ausgestaltet bzw. bemessen, dass sie die magnetische Anisotropie des magnetisch wirksamen Kerns 31, wenn überhaupt, nur unwesentlich beeinflussen. Dies kann beispielsweise dadurch erreicht werden, dass die Querstege 33 jeweils deutlich dünner ausgestaltet sind als die stabförmigen ferromagnetischen Elemente 32. Bevorzugt ist die Querschnittsfläche senkrecht zur Längserstreckung jedes Querstegs 33 mindestens um einen Faktor vier, vorzugsweise mindestens um einen Faktor neun kleiner als die entsprechende Querschnittsfläche der stabförmigen ferromagnetischen Elemente 32. Hierdurch wird bewirkt, dass im Betriebszustand die Querstege 33 praktisch sofort magnetisch sättigen, also in den Bereich der Sättigungsmagnetisierung gelangen, sodass sie keinen wesentlichen Beitrag mehr zur magnetischen Flussführung leisten und somit die magnetische Anisotropie des magnetisch wirksamen Kerns 31 höchstens unwesentlich verändern.

Natürlich ist es auch möglich, dass die Querstege 33 aus einem von dem ferromagnetischen Material F verschiedenen Material, beispielsweise aus einem Kunststoff oder aus einem niederpermeablen Metall bestehen.

Die Querstege 33 dienen hauptsächlich dazu, die mechanische Stabilität des magnetisch wirksamen Kerns 31 des Rotors 3 zu erhöhen.

In den in Fig. 15-18 dargestellten Varianten sind mit beispielhaftem Charakter jeweils fünf stabförmige ferromagnetische Elemente 32 vorgesehen. Der Füllgrad beträgt jeweils etwa 50%.

Bei den in den Fig. 15-17 gezeigten Varianten sind die Querstege 33 innenliegend angeordnet.

Fig. 15 zeigt eine Variante, bei welcher zwischen zwei benachbarten stabförmigen ferromagnetischen Elementen 32 jeweils genau ein Quersteg 33 vorgesehen, welcher sich jeweils in Querrichtung Q erstreckt. Alle Querstege 33 sind miteinander fluchtend entlang des Durchmessers des magnetisch wirksamen Kerns 32 - also zentral - angeordnet.

Fig. 16 zeigt eine Variante, bei welcher zwischen zwei benachbarten stabförmigen ferromagnetischen Elementen 32 jeweils genau zwei Querstege 33 vorgesehen sind, welche sich jeweils in Querrichtung Q erstrecken. Die beiden Querstege 33, welche die gleichen ferromagnetischen Elemente 32 miteinander verbinden, sind jeweils symmetrisch bezüglich des Durchmessers des magnetisch wirksamen Kerns 31 angeordnet.

Fig. 17 zeigt eine Variante, bei welcher zwischen zwei benachbarten stabförmigen ferromagnetischen Elementen 32 jeweils genau drei Querstege 33 vorgesehen sind, welche sich jeweils in Querrichtung Q erstrecken. Von den drei Querstegen 33, welche die gleichen ferromagnetischen Elemente 32 miteinander verbinden, ist jeweils einer entlang des Durchmessers des magnetisch wirksamen Kerns 31 angeordnet und die beiden anderen Querstege 33 sind jeweils symmetrisch bezüglich des Durchmessers des magnetisch wirksamen Kerns 31 angeordnet.

Fig. 18 zeigt eine Variante, bei welcher die Querstege 33 radial aussen liegend angeordnet sind. Zwischen zwei benachbarten stabförmigen ferromagnetischen Elementen 32 sind jeweils genau zwei Querstege 33 vorgesehen, von denen jeder eines der beiden radial aussen liegenden Enden der benachbarten ferromagnetischen Elemente 32 verbindet. Bei dieser Ausgestaltung sind die Querstege 33 jeweils gekrümmt ausgestaltet und erstrecken sich jeweils in Umfangsrichtung des magnetisch wirksamen Kerns 31. Die Querstege 33 erstrecken sich somit entlang des Umfangs des magnetisch wirksamen Kerns 31.

Fig. 19 zeigt eine Variante, welche sehr ähnlich ist wie die in Fig. 18 dargestellte Variante. Jedoch sind bei der Variante gemäss Fig. 19 die Querstege 33 zu einem kompletten Ring 34 ergänzt, der sich entlang des gesamten Umfangs des magnetisch wirksamen Kerns 31 erstreckt und eine radial äussere Begrenzungsfläche des magnetisch wirksamen Kerns 31 bildet. Somit hat der magnetisch wirksame Kern 31 des Rotors 3 den radial aussen angeordneten Ring 34, welcher alle stabförmigen ferromagnetischen Elemente 32 umschliesst.

Fig. 20 zeigt eine Variante, welche sehr ähnlich ist wie die Variante in Fig. 19, und welche auch den radial aussen angeordneten Ring 34 aufweist. Allerdings sind bei der Variante in Fig. 20 die stabförmigen ferromagnetischen Elemente 32 so ausgestaltet und angeordnet wie bei der in Fig. 10 dargestellten Variante.

Fig. 21 zeigt eine Variante, welche ähnlich ist wie die in Fig. 9 dargestellte Variante. Jedoch weist die Variante gemäss Fig. 21 auch den radial aussen angeordneten Ring 34 auf. Dieser Ring 34 ist jedoch aus einem elektrisch leitenden Material gefertigt, welches verschieden ist von dem ferromagnetischen Material F. Der Ring 34 besteht hier beispielsweise aus einem nicht ferromagnetischen Metall, das eine gute elektrische Leitfähigkeit aufweist, z. B. Aluminium, ein Edelstahl oder Kupfer.

Durch den radial aussen angeordnete Ring 34 lässt sich die für die Steuerung und Regelung der Rotorposition benötigte Sensorik vereinfachen, mit welcher die radiale Position des Rotors 3 und/oder seine Drehstellung ermittelt wird. Der radial aussen angeordnete Ring 34, egal ob er aus dem ferromagnetischen Material F oder aus einem davon verschiedenen, elektrisch leitenden Material gefertigt ist, erstreckt sich über den gesamten Umfang des magnetisch wirksamen Kerns 31 und begrenzt diesen bezüglich der radialen Richtung. Der Ring 34 bildet also die radial äussere Begrenzungsfläche des magnetisch wirksamen Kerns 31. Durch den radial aussen angeordneten Ring 34 ist es gewährleistet, dass der Sollabstand des magnetisch wirksamen Kerns 31 des Rotors 3 von den Stirnflächen 421 der Spulenkerne 4 des Stators 2 über den gesamten Umfang des magnetischen Kerns 31 gesehen eine konstante Grösse ist. Der Sollabstand ist dabei der radiale Abstand zwischen dem Rotor 3 und den Querschenkeln 42 der Spulenkerne 4, wenn sich der Rotor 3 in der radialen Ebene in der zentrierten und unverkippten Position befindet. Die Konstanz des Sollabstands über die Umfangsrichtung des Rotors 3 - also entlang des Rings 34 - ermöglicht im Betriebszustand insbesondere eine einfachere messtechnische Erfassung der radialen Position des Rotors 3, weil der Sollabstand des magnetischen Kerns 31 unabhängig von der gerade aktuellen Winkelstellung des Rotors 3 für alle Spulenkerne 4 gleich gross und konstant ist.

Vorzugsweise sind diejenigen Teile des magnetisch wirksamen Kerns 31, welche aus dem ferromagnetischen Material F bestehen, also insbesondere die stabförmigen ferromagnetischen Elemente 32 und/oder die Querstege 33 (falls vorhanden), geblecht aus einer Mehrzahl von Rotorelementen 35 hergestellt, welche in axialer Richtung A oder in radialer Richtung gestapelt sind. Dies ist in Fig. 22 und Fig. 23 beispielhaft anhand der in Fig. 14 dargestellten Variante veranschaulicht. Fig. 22 zeigt eine Ausführungsform, bei welcher die Rotorelemente 35 in axialer Richtung A gestapelt sind. Fig. 23 zeigt eine Ausführungsform, bei welcher die Rotorelemente 35 in radialer Richtung gestapelt sind. Es versteht sich natürlich, dass diese geblechte Ausführungsform in sinngemäss gleicher Weise auch für alle anderen Varianten des magnetisch wirksamen Kerns 32 verwendet werden kann. Für die meisten Anwendungen ist die Stapelung der Rotorelemente 35 in axialer Richtung A, also gemäss Fig. 22, bevorzugt.

Es versteht sich, dass noch viele andere Varianten für die Ausgestaltung des magnetisch wirksamen Kerns 31 des Rotors 3 möglich sind, beispielsweise durch Kombinieren der beschriebenen Varianten oder durch Variieren der Anzahl der stabförmigen ferromagnetischen Elemente 32 oder deren geometrischer Form, oder durch Variieren der Anzahl und/oder der Anordnung der Querstege 33.

Im Folgenden werden nun Ausgestaltungen der Positionssensorik und Anordnungen der Positionssensoren erläutert, die sowohl für das erste Ausführungsbeispiel (Fig. 2) als auch für das zweite Ausführungsbeispiel (Fig. 3-5) verwendet werden können.

Für die Regelung und die Ansteuerung eines lagerlosen Motors und damit auch für die spezielle Ausgestaltung als Tempelmotor 1 müssen die radiale Rotorposition und die Winkelposition des Rotors 3 bekannt sein bzw. messtechnisch ermittelt werden. Mit der radialen Rotorposition ist dabei die radiale Lage des Rotors 3 in der radialen Ebene gemeint. Die radiale Ebene ist diejenige, in welcher der Rotor 3 im Betriebszustand magnetisch gelagert wird. Ist der Rotor 3 frei von Verkippungen so stimmt die radiale Ebene mit der magnetischen Rotorebene C überein. Die Winkelposition des Rotors 3 gibt bei seiner Rotation um die axiale Richtung A den relativen Drehwinkel des Rotors 3 bezüglich des Stators 2 an. Dieser Drehwinkel, der auch als Rotorwinkel bezeichnet wird, kann beispielsweise bestimmt werden, indem man in der x-y-Ebene, also in der radialen Ebene, eine beliebig orientierte x-Achse und eine dazu senkrechte y-Achse festlegt, die bezüglich des Stators 2 ortsfest sind. Der momentane Drehwinkel - und damit die Winkelposition des Rotors 3 - lässt sich dann als momentaner Winkel zu dieser x-Achse (oder natürlich auch zu der y-Achse) bestimmen.

Falls der ferromagnetischen Rotor 3 magnetisiert wird, indem mittels der Spulen 61 zusätzlich ein nicht Drehmoment bildender Statorstrom generiert wird, welcher mit dem Rotor 3 mitdreht, so ist grundsätzlich aus diesem mitdrehenden Statorstrom der Drehwinkel des Rotors 3 ermittelbar.

Fig. 24 zeigt in einer perspektivischen Darstellung den Stator gemäss Fig. 2 in Kombination mit dem magnetisch wirksamen Kern 31 des Rotors 3 gemäss der Variante aus Fig. 19, bei welcher der radial aussen angeordnete Ring 34 vorgesehen ist, welcher aus dem ferromagnetischen Material F besteht.

Ferner sind in Fig. 24 insgesamt sechs Positionssensoren 7 dargestellt, mit welchen die radiale Rotorposition - also seine Lage in der radialen oder der x-y-Ebene - ermittelbar ist. Die Positionssensoren 7 sind vorzugsweise Wirbelstromsensoren. Die Positionssensoren 7 können aber auch als optische Sensoren, als kapazitive Sensoren oder als Magnetfeldsensoren ausgestaltet sein, beispielsweise als Hallsensoren oder GMR-Sensoren. Die Positionssensoren 7 sind über nicht dargestellte Signalleitungen mit einer nicht dargestellten Kontroll- und Regeleinrichtung signalverbunden.

Es ist eine übliche und bekannte Massnahme, insgesamt vier Positionssensoren 7 vorzusehen, um die Position des Rotors 3 in der radialen Ebene zu bestimmen. Dabei liegen sich die Positionssensoren 7 paarweise diametral gegenüber. Prinzipiell sind zwei Positionssensoren 7 ausreichend, um die Position des Rotors 3 in der x-y-Ebene zur ermitteln, nämlich einer pro Koordinatenrichtung. Es ist jedoch bevorzugt, mindestens vier Positionssensoren 7 vorzusehen, um so aus dem Differenzsignal der sich paarweise gegenüberliegenden Positionssensoren 7 eine genauere Bestimmung der Lage des Rotors 3 zu ermöglichen. Um die Position des Rotors 3 noch genauer zu ermitteln, sind in der in Fig. 24 dargestellten Sensoranordnung insgesamt sechs Positionssensoren 7 vorgesehen, die sich paarweise diametral gegenüberliegen. Die Positionssensoren 7 sind alle in der radialen Ebene angeordnet, in welcher der Rotor 3 gelagert wird, also im unverkippten Zustand des Rotors 3 in seiner magnetischen Mittelebene C. Somit sind die Positionssensoren 7 bezüglich der axialen Richtung A alle mittig bezüglich des magnetisch wirksamen Kerns 32 angeordnet. Die Positionssensoren 7 sind äquidistant über die Umfangsrichtung verteilt. Jeweils zwischen den Querschenkeln 42 zweier benachbarter Spulenkerne 4 ist ein Positionssensor 7 angeordnet. Der Ring 34, welcher die radial äussere Begrenzungsfläche des magnetisch wirksamen Kerns 31 bildet dient als Messfläche für die Positionssensoren 7.

In Fig. 25 ist eine weitere Variante für die Anordnung der Positionssensoren 7 in einer perspektivischen Darstellung gezeigt. Bei der in Fig. 25 dargestellten Anordnung sind insgesamt zwölf Positionssensoren 7 vorgesehen, welche paarweise diametral gegenüberliegend zueinander angeordnet und äquidistant über die Umfangsrichtung verteilt sind. Zwischen zwei benachbarten Spulenkernen 4 sind jeweils zwei Positionssensoren 7 vorgesehen, welche bezüglich der axialen Richtung A übereinander angeordnet sind. Dabei ist jeweils der darstellungsgemäss obere der beiden Positionssensoren bezüglich der axialen Richtung A so angeordnet, dass er der darstellungsgemässen Oberkante des magnetisch wirksamen Kerns 31 gegenüberliegt, und der darstellungsgemäss untere der beiden Positionssensoren ist bezüglich der axialen Richtung A so angeordnet, dass er der darstellungsgemässen Unterkante des magnetisch wirksamen Kerns 31 gegenüberliegt. Diese Sensoranordnung hat den Vorteil, dass zusätzlich zu der radialen Position des Rotors 3 auch die axiale Position des Rotors 3, also seine Lage bezüglich der axialen Richtung A, sowie Verkippungen des Rotors 3 bezüglich der radialen Ebene ermittelbar sind.

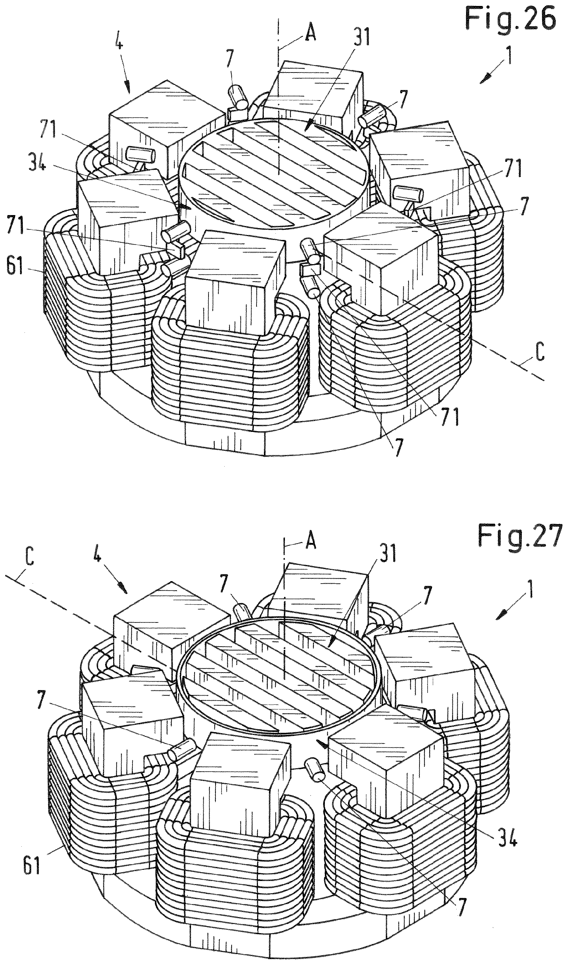

Fig. 26 zeigt eine Sensoranordnung, die im Wesentlichen der in Fig. 25 dargestellten entspricht. Allerdings sind bei der Anordnung gemäss Fig. 26 zusätzlich als Winkelsensoren noch sechs Magnetfeldsensoren 71 vorgesehen, die beispielsweise als Hallsensoren oder GMR-Sensoren ausgestaltet sind. Jeweils zwischen zwei Positionssensoren 7, die zwischen den gleichen Spulenkernen 4 angeordnet sind, ist einer der sechs Magnetfeldsensoren 71 angeordnet, vorzugsweise mittig (bezüglich der axialen Richtung A) zwischen diesen beiden Positionssensoren 7. Mit den Magnetfeldsensoren 71 kann zusätzlich der Drehwinkel des Rotors 3 (Rotorwinkel) bestimmt werden.

In den Fig. 24-26 ist jeweils der magnetisch wirksame Kern 31 gemäss der Variante aus Fig. 19 dargestellt, bei welcher der radial aussen angeordnete Ring 34 aus dem ferromagnetischen Material F besteht. Es ist natürlich für alle drei erläuterten Sensoranordnungen auch möglich, dass der magnetisch wirksame Kern 31 gemäss der Variante aus Fig. 21 ausgestaltet ist, bei welcher der Ring 34 aus einem elektrisch leitenden Material gefertigt ist, welches verschieden ist von dem ferromagnetischen Material F. Eine solche Ausführungsform mit dem magnetisch wirksamen Kern 31, der gemäss der Variante aus Fig. 21 ausgestaltet ist, ist in Fig. 27 beispielhaft anhand der Sensoranordnung gemäss Fig. 24 gezeigt.

Durch die Erfindung wird ferner eine Rotationsvorrichtung zum Fördern, Pumpen, Mischen oder Rühren von Fluiden vorgeschlagen, die dadurch gekennzeichnet ist, dass die Rotationsvorrichtung einen elektromagnetischen Drehantrieb 1 umfasst, der erfindungsgemäss ausgestaltet ist, wobei der Rotor 3 des Drehantriebs 1 als Rotor 3 der Rotationsvorrichtung ausgestaltet ist. Die vorangehenden Erläuterungen bezüglich des elektromagnetischen Drehantriebs 1 gelten in gleicher oder in sinngemäss gleicher Weise auch für die erfindungsgemässe Rotationsmaschine. Insbesondere haben die Bezugszeichen die gleiche Bedeutung wie sie bereits im Zusammenhang mit den vorangehend beschriebenen Ausführungsbeispielen erläutert sind.

Fig. 28 zeigt in einer perspektivischen Darstellung ein Ausführungsbeispiel einer erfindungsgemässen Rotationsvorrichtung, welches als Pumpvorrichtung und im speziellen als Zentrifugalpumpe ausgestaltet ist. Die Pumpvorrichtung ist gesamthaft mit dem Bezugszeichen 400 bezeichnet. Zum besseren Verständnis zeigt Fig. 29 noch eine schematische Schnittdarstellung der Pumpvorrichtung 400 in einem Schnitt in axialer Richtung A.

Die Pumpvorrichtung 400 ist zum Pumpen oder Fördern eines Fluids ausgestaltet und umfasst den Stator 2, der beispielsweise so ausgestaltet ist, wie es im Zusammenhang mit Fig. 2 und Fig. 3 erläutert ist.

Die Pumpvorrichtung 400 umfasst ferner ein Pumpengehäuse 401, das vorzugsweise aus einem Kunststoff hergestellt ist. Das Pumpengehäuse 401 hat einen sich in axialer Richtung A erstreckenden Einlass 402 für das zu fördernde Fluid, der zentral in der Mitte des Pumpengehäuses 401 angeordnet und als zylindrische Röhre in axialer Richtung A ausgestaltet ist, sowie einen sich in radialer Richtung erstreckenden Auslass 403 für das zu fördernde Fluid, der als zylindrische Röhre ausgestaltet ist. In dem Pumpengehäuse 401 ist der als Pumpenrotor ausgestaltete Rotor 3 vorgesehen, der den magnetisch wirksamen Kern 31 umfasst, sowie eine Mehrzahl von Flügeln 404, um das Fluid vom Einlass 402 zum Auslass 403 zu fördern. Die Flügel 404 sind bezüglich der axialen Richtung A darstellungsgemäss oberhalb des magnetisch wirksamen Kerns 31 angeordnet und erstrecken sich vorzugsweise in radialer Richtung. Die Pumpvorrichtung 400 ist hier also als Zentrifugalpumpe ausgestaltet. Natürlich sind auch andere Ausgestaltungen, z. B. als Axial- oder Helioaxialpumpe möglich.

Zum besseren Verständnis ist der als Pumpenrotor ausgestaltete Rotor 3 nochmals in den Fig. 30 und 31 dargestellt. Fig. 30 zeigt eine perspektivische Darstellung des Rotors 3 der Pumpvorrichtung 400, und Fig. 31 zeigt eine Aufsicht auf den Rotor 3 aus der axialen Richtung.

Ein vorteilhafter Aspekt ist es, dass der Rotor 3 als Integralrotor ausgestaltet ist, weil er sowohl der Rotor 3 des elektromagnetischen Drehantriebs 1 ist, als auch der Rotor 3 der Pumpvorrichtung 400, mit welchem das zu fördernde Fluid gepumpt wird. Insgesamt erfüllt der Rotor 3 somit drei Funktionen in einem: Er ist der Rotor des elektromagnetischen Antriebs, er ist der Rotor der magnetischen Lagerung, und er ist der Pumpenrotor bzw. das Laufrad, mit welchem das Fluid gefördert wird. Diese Ausgestaltung als Integralrotor bietet den Vorteil einer sehr kompakten und platzsparenden Ausgestaltung.

Der magnetisch wirksame Kern 31 des Rotors 3 ist von einer Ummantelung 8 umschlossen, die, genau wie die Flügel 404, vorzugsweise aus Kunststoff gefertigt ist bzw. sind. Die Ummantelung 8 umschliesst vorzugsweise den magnetischen Kern 31 des Rotors 3 vollständig, sodass der magnetisch wirksame Kern 31 von der Ummantelung 8 eingekapselt ist. Die Flügel 404 können einstückig mit der Ummantelung 8 ausgestaltet sein. Es ist aber auch möglich, ein Flügelrad mit den Flügeln 404 als separates Bauteil zu fertigen, vorzugsweise aus Kunststoff, und dieses Flügelrad dann fest mit der Ummantelung 8 zu verbinden, beispielsweise zu verschweissen oder zu verkleben.

Das Pumpengehäuse 401 umfasst eine unteren Teil 405, welcher den magnetisch wirksamen Kern 31 des Rotors 3 umgibt, sowie einen dazu axial benachbarten oberen Teil 406, welcher die Flügel 404 des Rotors umgibt. Beide Teile 405 und 406 haben senkrecht zur axialen Richtung eine im Wesentlichen kreisförmige Querschnittsfläche, wobei der untere Teil 405 einen kleineren Durchmesser aufweist als der obere Teil 406. Der Durchmesser des unteren Teils 405 ist dabei so bemessen, dass er mit möglichst geringem Spiel zwischen die Querschenkel 42 der Spulenkerne 4 einsetzbar und in einfacher Weise wieder von dem Stator 2 trennbar ist. Der Durchmesser des oberen Teils 406 ist so bemessen, dass er bezüglich der radiale Richtung mit den Querschenkeln 42 überlappt, so dass er auf den Querschenkeln 42 aufliegen kann.

Wenn das Pumpengehäuse 401 mit dem darin angeordneten Rotor 3 in den Stator 2 eingesetzt ist, umgeben die Querschenkel 42 der Spulenkerne 4 den unteren Teil 405 des Pumpengehäuses 401, in welchem sich der magnetisch wirksame Kern 31 befindet und zwar derart, dass die magnetische Rotorebene C in der radialen Ebene liegt und der magnetisch wirksame Kern 31 bezüglich der axialen Richtung A vollständig zwischen den Stirnflächen 421 der Querschenkel 42 liegt. Im Betriebszustand ist dann der magnetisch wirksame Kern 31 sowohl bezüglich der axialen Richtung A als auch bezüglich seiner radialen Position zwischen den Stirnflächen 421 der Querschenkel 42 zentriert. Somit ist der Rotor 3 im Betriebszustand berührungslos magnetisch antreibbar und berührungslos magnetisch bezüglich des Stators 2 lagerbar.

Der obere Teil 406 des Pumpengehäuses 401 befindet sich bezügliche der axialen Richtung A unmittelbar oberhalb der Querschenkel 42 der Spulenkerne 4. Der Auslass 403, der in diesen oberen Teil 406 mündet, liegt bezüglich der axialen Richtung A auf der gleichen Höhe wie die Flügel 404, was insbesondere im Hinblick auf die hydrodynamischen Kräfte vorteilhaft ist, die im Betrieb auf den Rotor 3 einwirken. Denn diese hydrodynamischen Kräfte verteilen sich möglichst gleichmässig über den Rotor 3. Eine solche relative Anordnung zwischen dem Auslass 403 und den Flügeln 404 ist insbesondere durch die Ausgestaltung des Drehantriebs 1 als Tempelmotor möglich, weil hier die Querschenkel 42 frei von Wicklungen sind, welche eine solche Anordnung des Auslasses 403 zumindest deutlich erschweren würden.

Um insbesondere die axiale magnetische Lagerung des Rotors 3 zu entlasten, ist es vorteilhaft, wenn der als Pumpenrotor ausgestaltete Rotor 3 eine Mehrzahl von Entlastungskanälen 9 aufweist, welche sich jeweils in axialer Richtung durch den magnetisch wirksamen Kern 31 des Rotors 3 hindurch erstrecken.

Zum besseren Verständnis zeigen die Fig. 32 und 33 zwei schematische Schnittdarstellungen des Rotors 3 aus Fig. 30. Fig. 32 zeigt einen Schnitt in axialer Richtung A entlang der Schnittlinie S1-S1 in Fig. 30. Fig. 32 zeigt einen Schnitt in axialer Richtung A entlang der Schnittlinie S2-S2 in Fig. 30.

Bei der hier dargestellten Ausgestaltung des Rotors 3 sind insgesamt sechs Entlastungskanäle 9 vorgesehen, welche alle in einem zentralen Bereich des Rotors 3 angeordnet sind, der von den radial innen liegenden Enden der Flügel 404 begrenzt wird (siehe insbesondere Fig. 31). Natürlich ist es auch möglich, weniger, beispielsweise vier, oder auch mehr, beispielsweise acht, Entlastungskanäle 9 in dem Rotor 3 vorzusehen.

Um die magnetischen Eigenschaften und insbesondere die magnetische Anisotropie des magnetisch wirksamen Kerns 31 möglichst wenig zu beeinflussen, sind alle Entlastungskanäle 9 derart angeordnet, dass sie sich im magnetisch wirksamen Kern 31 nur durch die aus dem niederpermeablen Material N bestehenden Flussbarrieren hindurch erstrecken, nicht aber durch die aus dem ferromagnetischen Material F bestehenden Bereiche, also insbesondere nicht durch die stabförmigen ferromagnetischen Elemente 32. Das heisst, vorzugsweise ist das ferromagnetische Material F des magnetisch wirksamen Kerns 31, also insbesondere die stabförmigen ferromagnetischen Elemente 32, vollständig frei von den Entlastungskanälen 9.

Im Betriebszustand kann das Fluid die Entlastungskanäle 9 durchströmen, wodurch ein zumindest teilweiser Ausgleich des Axialschubs bewirkt wird, welcher auf den Rotor 3. Hierdurch wird insbesondere die magnetische Axiallagerung des Rotors 3 deutlich entlastet.

Es versteht sich dass die erfindungsgemässe Rotationsvorrichtung in sinngemäss gleicher Weise auch als eine Mischvorrichtung zum Mischen von mehreren Substanzen, beispielsweise zum Mischen von mehreren Flüssigkeiten, zum Mischen von Suspensionen oder anderer fliessfähiger Substanzen oder auch als Rührvorrichtung ausgestaltet sein kann. Die erfindungsgemässe Rotationsvorrichtung kann insbesondere auch ganz allgemein eine Pump- oder Mischvorrichtung sein, mit der Medien oder Substanzen gemischt werden. Insbesondere können diese Substanzen Fluide oder Feststoffe, vorzugsweise Pulver, sein. Derartige Pump- oder Mischvorrichtungen eignen sich zum Mischen von Flüssigkeiten untereinander und/oder zum Mischen von mindestens einer Flüssigkeit mit einem Pulver oder sonstigen Feststoff und/oder zum Mischen von Gasen mit Flüssigkeiten und/oder Feststoffen.

Die erfindungsgemässe Rotationsvorrichtung wie beispielsweise die Pumpvorrichtung 400 kann in vorteilhafter Weise auch mit Komponenten für den Einmalgebrauch ausgestaltet sein und umfasst dann typischerweise eine Einmalvorrichtung, die für den Einmalgebrauch ausgestaltet ist, also bestimmungsgemäss nur genau einmal verwendet werden kann, und dann ersetzt werden muss, sowie eine wiederverwendbaren Vorrichtung, die für den Mehrfachgebrauch ausgestaltet ist. Für solche Anwendungen umfasst die Einmalvorrichtung vorzugsweise das Pumpengehäuse 401 und den darin angeordnete Rotor 3 als Einmalteile für den Einmalgebrauch, die also bestimmungsgemäss nur einmal verwendet werden können, und dann für die nächste Anwendung durch ein neues ungebrauchtes Teil ersetzt werden müssen. Die wiederverwendbare Vorrichtung umfasst den Stator 2. Für solche Anwendungen mit Komponenten für den Einmalgebrauch ist es ein besonderer Vorteil, dass das Zusammensetzen der Pumpvorrichtung aus der Einmalvorrichtung mit dem darin enthaltenen Rotor 3 und der wiederverwendbaren Vorrichtung mit dem Stator 2 äusserst einfach, sowie schnell und insbesondere ohne Werkzeuge durchführbar ist.

Für die Herstellung der aus Kunststoff bestehenden Teile des Rotors 3, also beispielsweise der Flügel 404, der Ummantelung 8 und der Flussbarrieren aus dem niederpermeablen Material N, sind beispielsweise folgende Kunststoffe bevorzugt: PolyEthylene (PE), PolyPropylene (PP), Low Density PolyEthylene (LDPE), Ultra Low Density PolyEthylene (ULDPE), Ethylene Vinyl Acetate (EVA), PolyEthylene Terephthalate (PET), PolyVinylChlorid (PVC), PolyVinyliDene Fluoride (PVDF), Acrylonitrile Butadiene Styrene (ABS), PolyAcryl, PolyCarbonate (PC).

Für die Herstellung des Pumpengehäuses 401 oder eines Mischbehälters einer Mischvorrichtung sind zusätzlich zu diesen Kunststoffen auch PolyPropylene (PP), PolyUrethan (PU) und Silicone bevorzugt.

Falls der Rotor 3 nicht mit einer Gamma-Sterilisierung behandelt werden muss, eignen sich für die aus Kunststoff bestehenden Komponenten auch die unter dem Markennamen Teflon bekannten Materialien Polytetrafluoroethylene (PTFE) und und Perfluoralkoxy-Polymere (PFA).

Aufgrund der Abwesenheit von mechanischen Lagern eignet sich die Pumpvorrichtung 400 insbesondere für solche Anwendungen, bei denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder chemisch aggressive Substanzen gefördert werden, welche mechanische Lager sehr schnell zerstören würden, beispielsweise das Pumpen von Slurry oder säurehaltigen Fluiden in der Halbleiterindustrie.

## Patentansprüche

1. Elektromagnetischer Drehantrieb, der als Tempelmotor ausgestaltet ist, mit einem Rotor (3), welcher berührungslos magnetisch antreibbar ist, welcher spulenfrei und frei von Permanentmagneten ausgestaltet ist, und welcher einen magnetisch wirksamen Kern (31) umfasst, sowie mit einem Stator (2), welcher als Lager- und Antriebsstator ausgestaltet ist, mit welchem der Rotor (3) im Betriebszustand berührungslos magnetisch um eine Solldrehachse antreibbar ist, und mit welchem der Rotor (3) berührungslos magnetisch bezüglich des Stators (2) lagerbar ist, wobei der Stator (2) eine Mehrzahl von Spulenkernen (4) aufweist, von denen jeder einen stabförmigen Längsschenkel (41) umfasst, welcher sich von einem ersten Ende (43) in einer Richtung parallel zur Solldrehachse bis zu einem zweiten Ende (44) erstreckt, sowie einen Querschenkel (42), welcher an dem zweiten Ende (44) des Längsschenkels (41) angeordnet ist, und welcher sich in einer radialen Richtung erstreckt, die senkrecht zu einer durch die Solldrehachse definierten axialen Richtung (A) ist, wobei eine Mehrzahl von Wicklungen (6) zur Erzeugung eines elektromagnetischen Drehfelds vorgesehen ist, von denen jede einen der Längsschenkel (41) umgibt, **dadurch gekennzeichnet, dass** der Stator (2) frei von Permanentmagneten ausgestaltet ist, und dass der Rotor (3) als ferromagnetischer oder ferrimagnetischer Rotor (3) scheibenförmig ausgestaltet ist, welcher genau eine magnetische Vorzugsrichtung (M) aufweist, die sich in radialer Richtung erstreckt, und wobei der magnetisch wirksame Kern (31) des Rotor (3) in der magnetischen Vorzugsrichtung (M) einen magnetischen Widerstand aufweist, der höchsten halb so gross ist wie der magnetische Widerstand in einer Richtung, welche senkrecht auf der magnetischen Vorzugsrichtung (M) und senkrecht auf der axialen Richtung (A) steht.

2. Drehantrieb nach Anspruch 1, wobei der magnetisch wirksame Kern (31) des Rotors (3) ein ferromagnetisches Material (F) umfasst, und wobei das ferromagnetische Material (F) einen Volumenanteil von 30% bis 80%, vorzugsweise von 40% bis 75%, und besonders bevorzugt von 50% bis 70% des magnetisch wirksamen Kerns (31) hat.

3. Drehantrieb nach einem der vorangehenden Ansprüche, wobei der scheibenförmige magnetisch wirksame Kern (31) des Rotors (3) einen Durchmesser (DR) aufweist, welcher grösser ist als das Zweifache, vorzugsweise grösser als das 2,4-fache, der axialen Höhe (HR) des magnetisch wirksamen Kerns (31).

4. Drehantrieb nach einem der vorangehenden Ansprüche, wobei der magnetisch wirksame Kern (31) des Rotors (3) eine Mehrzahl von stabförmigen ferromagnetischen Elementen (32) umfasst, die sich jeweils senkrecht zur axialen Richtung (A) erstrecken, und welche parallel und beabstandet zueinander angeordnet sind.

5. Drehantrieb nach Anspruch 4, bei welchem der magnetisch wirksame Kern (31) des Rotors (3) eine Mehrzahl von Querstegen (33) aufweist, von denen jeder zwei benachbarte ferromagnetische Elemente (32) miteinander verbindet.

6. Drehantrieb nach einem der vorangehenden Ansprüche, wobei der magnetisch wirksame Teil (31) des Rotors (3) geblecht aus einer Mehrzahl von Rotorelementen (35) hergestellt ist, wobei die Rotorelemente (35) vorzugsweise in axialer Richtung (A) gestapelt sind.

7. Drehantrieb nach einem der Ansprüche 4-6, wobei der magnetisch wirksame Kern (31) des Rotors (3) einen radial aussen angeordneten Ring (34) umfasst, welcher alle stabförmigen ferromagnetischen Elemente (32) umschliesst.

8. Drehantrieb nach Anspruch 7, wobei der Ring (34) aus einem elektrisch leitenden Material gefertigt ist, welches verschieden von dem ferromagnetischen Material (F) des magnetisch wirksamen Kerns (31) des Rotors (3) ist.

9. Drehantrieb nach einem der vorangehenden Ansprüche, bei welchem jeder der Spulenkerne (4) jeweils geblecht aus Elementen (48) hergestellt ist, wobei die Elemente (48) in Umfangsrichtung des Rotors (3) gestapelt sind.

10. Drehantrieb nach einem der vorangehenden Ansprüche, wobei die dem Rotor (3) zugewandten Stirnflächen (421) der Querschenkel (42) der Spulenkerne (4) in axialer Richtung (A) eine Höhe (HS) aufweisen, die jeweils grösser ist als die axiale Höhe (HR) des magnetisch wirksamen Kerns (31) des Rotors (3).

11. Drehantrieb nach einem der vorangehenden Ansprüche, bei welchem die dem Rotor (3) zugewandten Stirnflächen (421) der Querschenkel (42) der Spulenkerne (4) jeweils gekrümmt als Segmente eines Kreiszylinders ausgestaltet sind, welcher koaxial mit dem Rotor (3) ist, sodass der Rotor (3) in einem zentrierten Zustand über die jeweilige Stirnfläche (421) gesehen einen konstanten Abstand in radialer Richtung von der Stirnfläche (421) hat.

12. Drehantrieb nach einem der vorangehenden Ansprüche, wobei eine Mehrzahl von Positionssensoren (7) zur Bestimmung der Position des Rotors (3) vorgesehen ist, wobei jeder Positionssensor (7) zwischen zwei benachbarten Spulenkernen (4) angeordnet ist.

13. Rotationsvorrichtung zum Fördern, Pumpen, Mischen oder Rühren von Fluiden, **dadurch gekennzeichnet, dass** die Rotationsvorrichtung einen elektromagnetischen Drehantrieb (1) umfasst, der gemäss einem der Ansprüche 1-12 ausgestaltet ist, wobei der Rotor (3) des Drehantriebs (1) als Rotor (3) der Rotationsvorrichtung ausgestaltet ist.

14. Rotationsvorrichtung nach Anspruch 13, wobei der Rotor (3) als Pumpenrotor (3) ausgestaltet ist, und eine Mehrzahl von Flügeln (404) zum Fördern eines Fluids aufweist.

15. Rotationsvorrichtung nach Anspruch 14, wobei der Rotor (3) eine Mehrzahl von Entlastungskanälen (9) aufweist, welche sich jeweils in axialer Richtung (A) durch den magnetisch wirksamen Kern (31) des Rotors (3) hindurch erstrecken, und wobei jeder Entlastungskanal (9) derart angeordnet ist, dass das ferromagnetische Material (F) des magnetisch wirksamen Kerns (31) des Rotors (3) vollständig frei von Entlastungskanälen (9) ist.

## Claims

1. An electromagnetic rotary drive configured as a temple motor, with a rotor (3), which is contactlessly magnetically drivable, which is configured as coil-free and free of permanent magnets, and which comprises a magnetically effective core (31) and a stator (2) being configured as a bearing and a drive stator, with which the rotor (3) is contactlessly magnetically drivable about a desired axis of rotation in the operating state, and with which the rotor (3) can be contactlessly magnetically levitated with respect to the stator (2), wherein the stator (2) has a plurality of coil cores (4), each of them comprising a bar-shaped longitudinal limb (41) extending from a first end (43) in a direction in parallel with a desired axis of rotation up to a second end (44) and a transverse limb (42) being arranged at the second end (44) of the longitudinal limb (41) and extending in a radial direction, which is perpendicular to an axial direction (A) defined by the desired axis of rotation, wherein a plurality of windings (6) is provided for generating an electromagnetic rotational field, each of the windings surrounding one of the longitudinal limbs (41), **characterized in that** the stator (2) is configured free of permanent magnets, and that the rotor (3) is configured as a disk-shaped ferromagnetic or ferrimagnetic rotor (3), which exactly has one preferential magnetic direction (M) extending in a radial direction, and wherein the magnetically effective core (31) of the rotor (3) has a magnetic resistance in the preferential magnetic direction (M), which magnetic resistance is at most half as large as the magnetic resistance in a direction, which stands perpendicular on the preferential magnetic direction (M) and perpendicular on the axial direction (A).

2. A rotary drive according to claim 1, wherein the magnetically effective core (31) of the rotor (3) comprises a ferromagnetic material (F), and wherein the ferromagnetic material (F) has a volume fraction of 30% to 80%, preferably 40% to 75%, and particularly preferred 50% to 70% of the magnetically active core (31).

3. A rotary drive according to anyone of the preceding claims, wherein the disk-shaped magnetically effective core (31) of the rotor (3) has a diameter (DR), which is greater than 2 times, preferably greater than 2.4 times, the axial height (HR) of the magnetically effective core (31).

4. A rotary drive according to anyone of the preceding claims, wherein the magnetically effective core (31) of the rotor (3) comprises a plurality of bar-shaped ferromagnetic elements (32), which each extend perpendicular to the axial direction (A) and which are arranged parallel and spaced apart to each other.

5. A rotary drive according to claim 4, wherein the magnetically effective core (31) of the rotor (3) comprises a plurality of transverse webs (33) each connecting two adjacent ferromagnetic elements (32).

6. A rotary drive according to anyone of the preceding claims, wherein the magnetically effective portion (31) of the rotor (3) is made of sheet metal from a plurality of rotor elements (35), wherein the rotor elements (35) are preferably stacked in an axial direction (A).

7. A rotary drive according to anyone of the claims 4 to 6, wherein the magnetically effective core (31) of the rotor (3) comprises a radially outwardly arranged ring (34) surrounding all bar-shaped ferromagnetic elements (32).

8. A rotary drive according to claim 7, wherein the ring (34) is made of an electrically conducting material being different from the ferromagnetic material (F) of the magnetically effective core (31) of the rotor (3).

9. A rotary drive according to anyone of the preceding claims, wherein each of the coil cores (4) is respectively made of sheet metal from elements (48), wherein the elements (48) are stacked in the circumferential direction of the rotor (3).

10. A rotary drive according to anyone of the preceding claims, wherein the end faces (421) of the transverse limbs (42) of the coil cores (4) facing the rotor (3) have a height (HS) in the axial direction (A), which is respectively larger than the axial height (HR) of the magnetically effective core (31) of the rotor (3).

11. A rotary drive according to anyone of the preceding claims, wherein the end faces (421) of the transverse limbs (42) of the coil cores (4) facing the rotor (3) are respectively configured in a curved manner as segments of a circular cylinder being coaxial with the rotor (3), so that the rotor (3) has a constant distance in a radial direction from the end face (421) in a centered state when viewed over the respective end face (421).

12. A rotary drive according to anyone of the preceding claims, wherein a plurality of position sensors (7) is provided for determining the position of the rotor (3), wherein each position sensor (7) is arranged between two adjacent coil cores (4).

13. A rotational device for conveying, pumping, mixing or stirring fluids, **characterized in that** the rotational device comprises an electromagnetic rotary drive (1) being configured according to anyone of the claims 1 to 12, wherein the rotor (3) of the rotary drive (1) is configured as rotor (3) of the rotational device.

14. A rotational device according to claim 13, wherein the rotor (3) is configured as a pump rotor (3) and has a plurality of vanes (404) for conveying a fluid.

15. A rotational device according to claim 14, wherein the rotor (3) has a plurality of relief channels (9) extending respectively in the axial direction (A) through the magnetically effective core (31) of the rotor (3), and wherein each relief channel (9) is arranged in such a way that the ferromagnetic material (F) of the magnetically effective core (31) of the rotor (3) is completely free of relief channels (9).

## Revendications

1. Un entraînement rotatif électromagnétique, qui est conçu comme un moteur à temple, avec un rotor (3), qui peut être entraîné magnétiquement sans contact, qui est conçu sans bobine et sans aimants permanents et qui comprend un noyau à effet magnétique (31), et avec un stator (2), qui est conçu comme un stator de palier et d'entraînement, avec lequel le rotor (3) peut être entraîné magnétiquement sans contact autour d'un axe de rotation de consigne dans l'état de fonctionnement, et avec lequel le rotor (3) peut être monté magnétiquement sans contact par rapport au stator (2), dans lequel le stator (2) a une pluralité de noyaux de bobine (4), chacun d'entre eux comprenant une branche longitudinale en forme de tige (41) s'étendant depuis une première extrémité (43) dans une direction parallèle à l'axe de rotation de consigne jusqu'à une deuxième extrémité (44), et une branche transversale (42) étant disposée à la deuxième extrémité (44) de la branche longitudinale (41) et s'étendant dans une direction radiale, qui est perpendiculaire à une direction axiale (A) définie par l'axe de rotation de consigne, dans lequel une pluralité d'enroulements (6) est prévue pour générer un champ rotatif électromagnétique, chacun d'entre eux entourant l'un des branches longitudinales (41), **caractérisé en ce que** le stator (2) est conçu sans aimants permanents et **en ce que** le rotor (3) est conçu comme un rotor ferromagnétique ou ferrimagnétique (3) en forme de disque, qui présente exactement une direction magnétique préférentielle (M) s'étendant dans une direction radiale, et dans lequel le noyau à effet magnétique (31) du rotor (3) a une résistance magnétique dans la direction magnétique préférentielle (M), qui est au plus deux fois moins grande que la résistance magnétique dans une direction, qui est perpendiculaire à la direction magnétique préférentielle (M) et perpendiculaire à la direction axiale (A).

2. Un entraînement rotatif selon la revendication 1, dans lequel le noyau à effet magnétique (31) du rotor (3) comprend un matériau ferromagnétique (F), et dans lequel le matériau ferromagnétique (F) a une fraction volumique de 30% à 80%, de préférence de 40% à 75%, et particulièrement préférée de 50% à 70% du noyau à effet magnétique (31).

3. Un entraînement rotatif selon l'une des revendications précédentes, dans lequel le noyau à effet magnétique en forme de disque (31) du rotor (3) a un diamètre (DR) qui est supérieur à 2 fois, de préférence supérieur à 2,4 fois, la hauteur axiale (HR) du noyau à effet magnétique (31).

4. Un entraînement rotatif selon l'une des revendications précédentes, dans lequel le noyau à effet magnétique (31) du rotor (3) comprend une pluralité d'éléments ferromagnétiques (32) en forme de tige, qui s'étendent chacun perpendiculairement à la direction axiale (A) et qui sont disposés parallèlement et à distance les uns des autres.

5. Un entraînement rotatif selon la revendication 4, dans lequel le noyau à effet magnétique (31) du rotor (3) a une pluralité de bandes transversales (33) reliant chacune deux éléments ferromagnétiques (32) adjacents.

6. Un entraînement rotatif selon l'une des revendications précédentes, dans lequel la partie à effet magnétique (31) du rotor (3) est fait en tôle à partir d'une pluralité d'éléments de rotor (35), les éléments de rotor (35) étant de préférence empilés dans une direction axiale (A).

7. Un entraînement rotatif selon l'une des revendications 4 à 6, dans lequel le noyau à effet magnétique (31) du rotor (3) comprend un anneau (34) disposé radialement vers l'extérieur et entourant tous les éléments ferromagnétiques (32) en forme de tige.

8. Un entraînement rotatif selon la revendication 7, dans lequel l'anneau (34) est fait d'un matériau électriquement conducteur qui est différent du matériau ferromagnétique (F) du noyau à effet magnétique (31) du rotor (3).

9. Un entraînement rotatif selon l'une des revendications précédentes, dans lequel chacun des noyaux de bobine (4) est respectivement fait d'éléments (48) en tôle, les éléments (48) étant empilés dans la direction circonférentielle du rotor (3).

10. Un entraînement rotatif selon l'une des revendications précédentes, dans lequel les faces frontales (421) des branches transversales (42) des noyaux de bobine (4) tournées vers le rotor (3) ont une hauteur (HS) dans la direction axiale (A), qui est respectivement plus grande que la hauteur axiale (HR) du noyau à effet magnétique (31) du rotor (3).

11. Un entraînement rotatif selon l'une des revendications précédentes, dans lequel les faces frontales (421) des branches transversales (42) des noyaux de bobine (4) tournées vers le rotor (3) sont respectivement conçues de manière incurvée comme des segments d'un cylindre circulaire coaxial au rotor (3), de sorte que le rotor (3), vu sur la face frontale respective (421), présente une distance constante dans la direction radiale par rapport à la face frontale (421) dans un état centré.

12. Un entraînement rotatif selon l'une des revendications précédentes, dans lequel une pluralité de capteurs de position (7) est prévue pour déterminer la position du rotor (3), dans lequel chaque capteur de position (7) est disposé entre deux noyaux de bobine (4) adjacents.

13. Un dispositif rotatif pour transporter, pomper, mélanger ou agiter des fluides, **caractérisé en ce que** le dispositif rotatif comprend un entraînement rotatif électromagnétique (1) qui est conçu selon l'une des revendications 1 à 12, le rotor (3) de l'entraînement rotatif (1) étant conçu comme un rotor (3) du dispositif rotatif.

14. Un dispositif rotatif selon la revendication 13, dans lequel le rotor (3) est conçu comme un rotor de pompe (3) et présente une pluralité d'aubes (404) pour transporter un fluide.

15. Un dispositif rotatif selon la revendication 14, dans lequel le rotor (3) présente une pluralité de canaux de décharge (9) s'étendant respectivement dans la direction axiale (A) à travers le noyau à effet magnétique (31) du rotor (3), et dans lequel chaque canal de décharge (9) est disposé de telle sorte que le matériau ferromagnétique (F) du noyau à effet magnétique (31) du rotor (3) est complètement exempt de canaux de décharge (9).
